# EUROPEAN PATENT APPLICATION

(11) **EP 4 661 496 A1**
(43) Date of publication of application: **10.12.2025**
(21) Application number: 24755896.8
(22) Date of filing: 19.01.2024
(51) Int. Cl.: H04W 36/00

(54) **COMMUNICATION METHOD AND APPARATUS**

(30) Priority: 16.02.2023 CN 202310153102; 07.04.2023 CN 202310395099
(71) Applicant: Huawei Technologies Co., Ltd., Shenzhen, Guangdong 518129 (CN)
(72) Inventor: MAO, Yingchao, Shenzhen, Guangdong 518129 (CN); LI, Bingzhao, Shenzhen, Guangdong 518129 (CN); SHI, Yulong, Shenzhen, Guangdong 518129 (CN); LI, Jiaojiao, Shenzhen, Guangdong 518129 (CN); GU, Zhifang, Shenzhen, Guangdong 518129 (CN)
(74) Representative: Goddar, Heinz J.
(86) International application number: PCT/CN2024/073204
(87) International publication number: WO 2024/169521

(57) **Abstract**

A communication method and apparatus are provided. The method includes: receiving a first configuration from an access network device, where the first configuration includes a first reference configuration and a delta configuration of a target cell, and the first reference configuration is related to the delta configuration of the target cell; and determining a radio configuration of a terminal apparatus based on the first reference configuration and the delta configuration of the target cell. According to the method and the apparatus in this application, the terminal apparatus can accurately apply a configuration of the target cell, thereby improving handover efficiency.

## Description

### CROSS-REFERENCE TO RELATED APPLICATIONS

This application claims priority to Chinese Patent Application No. 202310153102.6, filed with the China National Intellectual Property Administration on February 16, 2023 and entitled "COMMUNICATION METHOD AND APPARATUS", which is incorporated herein by reference in its entirety; and this application claims priority to Chinese Patent Application No. 202310395099.9, filed with the China National Intellectual Property Administration on April 7, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Mobility management enables, by changing a serving cell of a terminal, the terminal to use network services regardless of how the terminal moves within a network coverage area. Mobility in a connected state is implemented through cell handover. In a wireless communication system, when a terminal is in a service connected state and serving of a service is maintained, if the terminal moves from one cell to another cell, a handover needs to be performed to ensure communication continuity of the terminal.

Currently, in a 5th generation mobile communication technology (5th generation, 5G) radio access network (radio access network, RAN) architecture, it is considered that an access network device adopts independent deployment of a central unit (central unit, CU) and a distributed unit (distributed unit, DU), to better meet requirements of various scenarios and applications. In CU-DU separated base station deployment, to reduce a handover delay and further enhance service continuity, it is considered that a 5G system adopts lower-layer triggered handover.

In a handover process in which a terminal is handed over from a source cell to a target cell, how the terminal determines a configuration of the target cell is a research direction.

### SUMMARY

Embodiments of this application provide a communication method and apparatus, to improve performance of a terminal device during cell handover.

According to a first aspect, a communication method is provided. The method is applied to a terminal, and the method is executed by a terminal apparatus. The terminal apparatus may be a terminal, or a chip, a circuit, or the like used in the terminal. The method includes: receiving a first configuration from an access network device, where the first configuration includes a first reference configuration and a delta configuration of a target cell, and the first reference configuration is related to the delta configuration of the target cell; and determining a radio configuration of a terminal apparatus based on the first reference configuration and the delta configuration of the target cell.

According to the foregoing design, based on a current handover design, if a configuration of the target cell is the delta configuration, the terminal apparatus directly applies the delta configuration of the target cell based on a configuration of a source cell. The determined configuration of the target cell is inaccurate, resulting in a handover failure. Further, if the terminal apparatus does not apply the configuration of the target cell based on the current handover design, how the terminal applies the configuration of the target cell is unclear, which also causes a handover failure. In this embodiment of this application, the delta configuration of the target cell is applied based on the first reference configuration. The terminal apparatus determines a configuration of the target cell based on the first reference configuration and the delta configuration of the target cell. The configuration of the target cell determined by the terminal apparatus is accurate. Therefore, the determined radio configuration of the terminal in the target cell is also accurate, thereby improving a handover success rate.

In an implementation, the method further includes: releasing current configuration information of the terminal apparatus except at least one of a master cell group MCG cell radio network temporary identifier C-RNTI, an access stratum security configuration, a radio bearer RB configuration, a radio link control RLC bearer configuration, a secondary cell SCell configuration, or a logged measurement configuration.

According to the foregoing design, when a reference configuration is applied, the foregoing configurations such as the radio bearer configuration, the RLC bearer configuration in a cell group, or the secondary cell configuration may not be released first. Subsequently, after the delta configuration of the target cell is applied, the foregoing configurations that are included in the source cell but not included in the target cell are released. This reduces handover interruption and a delay, improves handover efficiency and performance, and ensures service continuity.

In an implementation, determining the radio configuration of the terminal apparatus based on the first reference configuration and the delta configuration of the target cell includes: if a first variable includes a radio configuration of the first reference configuration, updating the first variable based on the delta configuration of the target cell, where an updated first variable includes a radio configuration of the target cell; and
determining the radio configuration of the terminal apparatus based on the radio configuration in the updated first variable.

In an implementation, updating the first variable based on the delta configuration of the target cell includes at least one of the following: if the first variable includes a first radio configuration, a first list includes a second radio configuration, the first list is a list in the delta configuration of the target cell, and an identifier of the first radio configuration is the same as an identifier of the second radio configuration, updating the first radio configuration in the first variable to the second radio configuration; if the first list includes a third radio configuration, and the first variable includes a radio configuration other than the third radio configuration, adding the third radio configuration to the first variable; or if the first variable includes a fourth radio configuration, a second list includes a fifth radio configuration, the second list is a list in the delta configuration of the target cell, and an identifier of the fourth radio configuration is the same as an identifier of the fifth radio configuration, releasing the fourth radio configuration in the first variable.

In an implementation, determining the radio configuration of the terminal apparatus based on the radio configuration in the updated first variable includes at least one of the following: if the updated first variable includes a sixth radio configuration, a radio configuration of a source cell includes a seventh radio configuration, and an identifier of the sixth radio configuration is the same as an identifier of the seventh radio configuration, reconfiguring the seventh radio configuration based on the sixth radio configuration; if the updated first variable includes an eighth radio configuration, and the radio configuration of the source cell includes a configuration other than the eighth radio configuration, creating the eighth radio configuration in the radio configuration of the terminal apparatus; or if the radio configuration of the source cell includes a ninth radio configuration, and the updated first variable includes a configuration other than the ninth radio configuration, releasing the ninth radio configuration in the radio configuration of the terminal apparatus.

According to the foregoing design, for a radio configuration that is in the configuration of the target cell and that has a same identifier as the configuration of the source cell, a manner of "first releasing and then creating" is not used, but the configuration of the source cell is reconfigured or updated based on the configuration of the target cell, thereby improving handover efficiency and reducing a handover delay.

In an implementation, the method further includes: releasing current cell group configuration information of the terminal apparatus in a cell group configuration except at least one of an MCG C-RNTI or an RLC bearer configuration.

According to the foregoing design, when a reference configuration is applied, the foregoing configuration that affects service continuity in a master cell group may not be released first. After the delta configuration of the target cell is applied, a configuration that is included in the source cell but not included in the target cell is released. This reduces handover interruption and a delay, improves handover efficiency and performance, and ensures service continuity.

In an implementation, determining the radio configuration of the terminal apparatus based on the first reference configuration and the delta configuration of the target cell includes: determining a second reference configuration based on a radio configuration in the first reference configuration; and determining the radio configuration of the terminal apparatus based on the second reference configuration and the delta configuration of the target cell.

According to the foregoing design, based on a current handover design, if a configuration of the target cell is the delta configuration, the terminal apparatus directly applies the delta configuration of the target cell based on a configuration of a source cell. The determined configuration of the target cell is inaccurate, resulting in a handover failure. Alternatively, if the terminal apparatus does not apply a configuration of the target cell based on a current handover design, how the terminal applies the configuration of the target cell in LTM is unclear, which also causes a handover failure. In this embodiment of this application, the delta configuration of the target cell is applied based on the second reference configuration determined based on the first reference configuration. The terminal apparatus determines a configuration of the target cell based on the first reference configuration and the delta configuration of the target cell. The configuration of the target cell determined by the terminal apparatus is accurate. Therefore, the determined radio configuration of the terminal in the target cell is also accurate, thereby improving a handover success rate.

In an implementation, determining the second reference configuration based on the radio configuration in the first reference configuration includes at least one of the following: if the first reference configuration includes a tenth radio configuration, a radio configuration of a source cell includes an eleventh radio configuration, and an identifier of the tenth radio configuration is the same as an identifier of the eleventh radio configuration, updating the eleventh radio configuration of the terminal apparatus to the tenth radio configuration; or if the first reference configuration includes a twelfth radio configuration, and the radio configuration of the source cell includes a radio configuration other than the twelfth radio configuration, creating the twelfth radio configuration, where the second reference configuration includes at least the tenth radio configuration and the twelfth radio configuration. Optionally, the second reference configuration further includes another radio configuration other than the eleventh radio configuration in a current radio configuration of the terminal.

In an implementation, when the first reference configuration includes the tenth radio configuration, the radio configuration of the source cell includes the eleventh radio configuration, and the identifier of the tenth radio configuration is the same as the identifier of the eleventh radio configuration, the method further includes:
deleting the identifier of the eleventh radio configuration from a radio configuration identifier that is of the source cell and that is included in a second variable.

In an implementation, determining the radio configuration of the terminal apparatus based on the second reference configuration and the delta configuration of the target cell includes at least one of the following: if the second reference configuration of the terminal apparatus includes a thirteenth radio configuration, the first reference configuration includes a fourteenth radio configuration, a third list includes a fifteenth radio configuration, the third list is a list in the delta configuration of the target cell, and the thirteenth radio configuration, the fourteenth radio configuration, and the fifteenth radio configuration have a same identifier, reconfiguring the thirteenth radio configuration of the terminal apparatus based on the fifteenth radio configuration; if the third list includes a sixteenth radio configuration, the third list is the list in the delta configuration of the target cell, and the second reference configuration and the first reference configuration include a configuration other than the sixteenth radio configuration, creating the sixteenth radio configuration; if the third list includes a seventeenth radio configuration, the third list is the list in the delta configuration of the target cell, the first reference configuration includes a configuration other than the seventeenth radio configuration, the second reference configuration includes an eighteenth radio configuration, and an identifier of the seventeenth radio configuration is the same as an identifier of the eighteenth radio configuration, updating the eighteenth radio configuration based on the seventeenth radio configuration; or if a fourth list includes a nineteenth radio configuration, the fourth list is a list in the delta configuration of the target cell, the second reference configuration includes a twentieth radio configuration, and an identifier of the nineteenth radio configuration is the same as an identifier of the twentieth radio configuration, releasing the twentieth radio configuration in the radio configuration of the terminal apparatus.

In an implementation, when the third list includes the seventeenth radio configuration, the third list is the list in the delta configuration of the target cell, the first reference configuration includes the configuration other than the seventeenth radio configuration, the second reference configuration includes the eighteenth radio configuration, and the identifier of the seventeenth radio configuration is the same as the identifier of the eighteenth radio configuration, the method further includes: deleting the identifier of the seventeenth radio configuration from the radio configuration identifier that is of the source cell and that is included in the second variable.

In an implementation, the method further includes: releasing, in the radio configuration of the terminal apparatus, a radio configuration corresponding to the radio configuration identifier included in the second variable.

According to the foregoing design, a configuration that affects service continuity, for example, an RLC bearer, may not be released first in a handover process. After a reference configuration and the delta configuration of the target cell are applied, a configuration that is included in the source cell but not included in the target cell is released. This reduces a handover interruption and a handover delay, improves handover efficiency and performance, and ensures service continuity. In an implementation, before determining the radio configuration of the terminal apparatus based on the first reference configuration and the delta configuration of the target cell, the method further includes: receiving a handover command from the access network device; or meeting, by the terminal apparatus, a handover condition.

In a design, determining the radio configuration of the terminal apparatus based on the first reference configuration and the delta configuration of the target cell includes: generating a configuration of the target cell based on the first reference configuration and the delta configuration of the target cell; and replacing the radio configuration of the terminal apparatus with a radio configuration in the configuration of the target cell. Optionally, generating the configuration of the target cell includes: if a sixth variable includes the first reference configuration, reconfiguring the sixth variable based on the delta configuration of the target cell, where a reconfigured sixth variable is the generated configuration of the target cell.

According to the foregoing design, a method for generating the configuration of the target cell by the terminal is provided. For a radio configuration, for example, an RLC bearer configuration, an RB configuration, or a secondary cell configuration, when LTM handover is performed, if radio configurations included in the configuration of the source cell and included in the configuration of the target cell have a same identifier, the radio configuration in the configuration of the source cell may be replaced with the radio configuration in the target cell. In this way, an unnecessary process of releasing and adding a radio configuration can be avoided, a handover interruption and a handover delay can be reduced, handover efficiency and performance can be improved, and service continuity can be ensured.

In a design, the method further includes: if a measurement configuration in the configuration of the target cell is the same as a measurement configuration in a configuration of the terminal apparatus, retaining, by the terminal apparatus, a current measurement result.

A measurement configuration of the terminal may remain unchanged before and after the LTM handover. According to the foregoing design, unnecessary release or clearing of a measurement result when the terminal applies the configuration of the target cell during LTM can be avoided, thereby reducing measurement power consumption of the terminal and improving handover performance.

In a design, before determining the radio configuration of the terminal apparatus based on the first reference configuration and the delta configuration of the target cell, the method further includes: receiving a handover command from the access network device; or meeting, by the terminal apparatus, a handover condition.

In an implementation, the radio configuration of the terminal apparatus includes at least one of the following: a radio bearer RB configuration, a radio link control RLC bearer configuration, or a secondary cell configuration.

According to a second aspect, a communication method is provided. The method is applied to an access network device, and the method may be executed by the access network device, or a circuit, a chip, or the like in the access network device. The method includes: generating a first configuration, where the first configuration includes a reference configuration and a delta configuration of a target cell, the reference configuration is related to the delta configuration of the target cell, and the delta configuration of the target cell and the reference configuration are for determining a radio configuration of a terminal apparatus; and sending the first configuration to the terminal apparatus.

In an implementation, the radio configuration of the terminal apparatus includes at least one of the following: a radio bearer RB configuration, a radio link control RLC bearer configuration, or a secondary cell configuration.

In an implementation, after sending the first configuration to the terminal apparatus, further including: sending a handover command to the terminal apparatus.

According to a third aspect, an apparatus is provided. The apparatus includes a corresponding unit or module for performing the method according to the first aspect or the second aspect. The unit or module may be implemented by a hardware circuit, may be implemented by software, or may be implemented by a combination of a hardware circuit and software.

According to a fourth aspect, an apparatus is provided, and includes a processor and an interface circuit. The processor is configured to: communicate with another apparatus through the interface circuit, and perform the method according to the first aspect or the second aspect. There are one or more processors.

According to a fifth aspect, an apparatus is provided, and includes a processor coupled to a memory. The processor is configured to execute a program stored in the memory, to perform the method according to the first aspect or the second aspect. The memory may be located inside or outside the apparatus. In addition, there may be one or more processors.

According to a sixth aspect, an apparatus is provided, and includes a processor and a memory. The memory is configured to store computer instructions. When the apparatus runs, the processor executes the computer instructions stored in the memory, to enable the apparatus to perform the method according to the first aspect or the second aspect.

According to a seventh aspect, a chip system is provided, includes a processor or a circuit, and is configured to perform the method according to the first aspect or the second aspect.

According to an eighth aspect, a computer-readable storage medium is provided. The computer-readable storage medium stores instructions; and when the instructions are run on a communication apparatus, the method according to the first aspect or the second aspect is performed.

According to a ninth aspect, a computer program product is provided. The computer program product includes a computer program or instructions. When the computer program or the instructions are run by an apparatus, the method according to the first aspect or the second aspect is performed.

According to a tenth aspect, a system is provided, and includes an apparatus for performing the method according to the first aspect and an apparatus for performing the method according to the second aspect.

### BRIEF DESCRIPTION OF DRAWINGS

FIG. 1 is a diagram of a communication system according to an embodiment of this application;
FIG. 2 is a flowchart of L1/L2 handover according to an embodiment of this application;
FIG. 3 is another flowchart of L1/L2 handover according to an embodiment of this application;
FIG. 4 is a flowchart of a communication method according to an embodiment of this application;
FIG. 5 is a diagram of a structure of an apparatus according to an embodiment of this application; and
FIG. 6 is another diagram of a structure of an apparatus according to an embodiment of this application.

### DESCRIPTION OF EMBODIMENTS

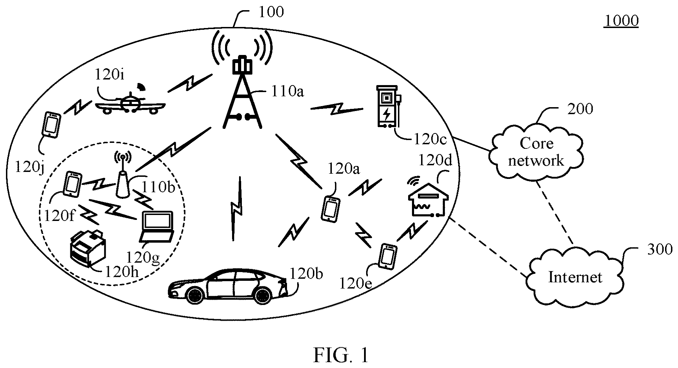

FIG. 1 is a diagram of an architecture of a communication system 1000 to which this application is applicable. As shown in FIG. 1, the communication system 1000 includes a radio access network 100 and a core network 200. Optionally, the communication system 1000 may further include an internet 300.

The radio access network 100 may include at least one access network device (for example, 100a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or a part of the functions of the core network device and a part of the functions of the access network device may be integrated into one physical device. Terminals may be connected to each other in a wired or wireless manner, and access network devices may be connected to each other in a wired or wireless manner. FIG. 1 is merely a diagram. The communication system 1000 may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be the access network device, or may be an apparatus that can support the access network device in implementing the functions, for example, a chip system, a hardware circuit, a software module, or a combination of a hardware circuit and a software module. The apparatus may be installed in the access network device, or may be matched with the access network device for use. In this application, the chip system may include a chip, or may include a chip and another discrete component. For ease of description, the following describes the technical solutions provided in this application by using an example in which the apparatus configured to implement the function of the access network device is the access network device.

### (1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

### (2) Central unit (central unit, CU) and distributed unit (distributed unit, DU)

An access network device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

Division into processing functions of the CU and the DU based on protocol layers is merely an example, and may be performed in another manner. For example, the CU or the DU may have functions of more protocol layers through division. For another example, the CU or the DU may have some processing functions of the protocol layers through division. In an implementation, a part of functions of the RLC layer and functions of protocol layers above the RLC layer are set on the CU, and remaining functions of the RLC layer and functions of protocol layers below the RLC layer are set on the DU. In another implementation, division of functions of the CU or the DU may alternatively be performed based on service types or other system requirements. For example, division may be performed based on latencies. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When used for sending, a function of the PHY layer may include one or more of the following: cyclic redundancy check (cyclic redundancy check, CRC) code addition, channel encoding, rate matching, scrambling, modulation, layer mapping, precoding, resource mapping, physical antenna mapping, or a radio frequency sending function. When used for receiving, a function of the PHY layer may include one or more of the following: CRC check, channel decoding, de-rate matching, descrambling, demodulation, layer de-mapping, channel detection, resource de-mapping, physical antenna de-mapping, or a radio frequency receiving function. The higher-layer functions of the PHY layer may include some functions of the PHY layer. For example, the some functions are closer to the MAC layer. The lower-layer functions of the PHY layer may include some other functions of the PHY layer. For example, the part of functions are closer to the radio frequency function. For example, the higher-layer functions of the PHY layer may include CRC code addition, channel encoding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include CRC code addition, channel encoding, rate matching, scrambling, modulation, layer mapping, and precoding. The lower-layer functions of the PHY layer may include resource mapping, physical antenna mapping, and radio frequency sending functions. For example, the higher-layer functions of the PHY layer may include CRC check, channel decoding, de-rate matching, decoding, demodulation, and layer de-mapping, and the lower-layer functions of the PHY layer may include channel detection, resource de-mapping, physical antenna de-mapping, and the radio frequency receiving function. Alternatively, the higher-layer functions of the PHY layer may include CRC check, channel decoding, de-rate matching, decoding, demodulation, layer de-mapping, and channel detection, and the lower-layer functions of the PHY layer may include resource de-mapping, physical antenna de-mapping, and the radio frequency receiving function.

For example, a function of the CU may be implemented by one entity, or may be implemented by different entities. For example, the function of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by these modules also fall within the protection scope of embodiments of this application.

In a possible implementation, the access network device includes the CU-CP, the CU-UP, the DU, and the RU. For example, embodiments of this application are executed by the DU, or the DU and the RU, or the CU-CP, the DU, and the RU, or the CU-UP, the DU, and the RU. This is not limited. Methods performed by the modules also fall within the protection scope of embodiments of this application.

The terminal may alternatively be referred to as a terminal device, user equipment (user equipment, UE), a mobile station, a mobile terminal, or the like. The terminal may be widely used in communication in various scenarios, for example, including but not limited to one or more of the following scenarios: device-to-device (device-to-device, D2D), vehicle-to-everything (vehicle-to-everything, V2X), machine-type communication (machine-type communication, MTC), internet of things (internet of things, IoT), virtual reality, augmented reality, industrial control, self-driving, telemedicine, a smart grid, smart furniture, a smart office, smart wearable, smart transportation, a smart city, or the like. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

In this application, an apparatus configured to implement the functions of the terminal may be the terminal, or may be an apparatus that can support the terminal in implementing the functions, for example, a chip system, a hardware circuit, a software module, or a combination of the hardware circuit and the software module. The apparatus may be installed in the terminal or may be matched with the terminal for use. For ease of description, the following describes technical solutions provided in this application by using an example in which the apparatus configured to implement the function of the terminal is the terminal.

The access network device and the terminal may be at fixed locations, or may be movable. The access network device and/or the terminal may be deployed on land, including indoors or outdoors and handheld or vehicle-mounted; or may be deployed on the water; or may be deployed on an airplane, a balloon, and an artificial satellite in the air. Application scenarios of the access network device and the terminal are not limited in this application. The access network device and the terminal may be deployed in a same scenario or different scenarios. For example, the access network device and the terminal are both deployed on land; or the access network device is deployed on land, and the terminal is deployed on the water. Examples are not provided one by one.

Roles of the access network device and the terminal may be relative. For example, a helicopter or an uncrewed aerial vehicle 120i in FIG. 1 may be configured as a mobile access network device. For the terminal 120j that accesses the radio access network 100 through 120i, the terminal 120i is an access network device. However, for the access network device 110a, 120i is a terminal, to be specific, 110a and 120i communicate with each other according to a radio air interface protocol. Alternatively, 110a and 120i communicate with each other by using an interface protocol between access network devices. In this case, for 110a, 120i is also an access network device. Therefore, both the access network device and the terminal may be collectively referred to as communication apparatuses. 110a and 110b in FIG. 1 may be referred to as communication apparatuses having the functions of the access network device, and 120a to 120j in FIG. 1 may be referred to as communication apparatuses having the functions of the terminal.

Communication between an access network device and a terminal, between access network devices, or between terminals may be performed by using a licensed spectrum, an unlicensed spectrum, or both the licensed spectrum and the unlicensed spectrum; may be performed by using a spectrum below 6 gigahertz (gigahertz, GHz); may be performed by using a spectrum above 6 GHz; or may be performed by using both the spectrum below 6 GHz and the spectrum above 6 GHz. A spectrum resource for wireless communication is not limited in this application.

A layer1 (layer1, L1)/layer2 (layer2, L2) triggered mobility (L1/L2 triggered mobility, LTM) process is also referred to as low-layer triggered mobility, and refers to cell handover of a terminal triggered by L1/L2 signaling. For example, an access network device sends L1/L2 signaling to a terminal, where the L1/L2 signaling may include information about a target cell, for example, a configuration identifier of the target cell. The terminal receives the L1/L2 signaling from the access network device, and is handed over from a source cell to the target cell, where the source cell is a serving cell of the terminal before the handover, and the target cell is a serving cell of the terminal after the handover. The L1/L2 signaling may also be referred to as an L1/L2 handover command, an L1/L2 cell handover command, an LTM handover command, or the like. This is not limited. Optionally, according to protocol stack division, L1 includes a PHY layer, L2 includes a MAC layer, an RLC layer, and a PDCP layer, and L3 includes an RRC layer. The L1/L2 signaling may be MAC control element (control element, CE) signaling or downlink control information (downlink control information, DCI). The LTM handover can reduce a handover delay, thereby reducing a service interruption and improving user experience of the terminal.

A main idea of LTM is as follows: An access network device determines one or more LTM candidate cells, and configures the LTM candidate cells for a terminal by using an RRC message. The access network device receives an L1 measurement report from the terminal, selects a target cell from the LTM candidate cells based on the L1 measurement report, and sends an L1/L2 handover command to the terminal to trigger LTM cell handover of the terminal.

In an implementation, the access network device adopts a CU-DU separation architecture. The access network device includes a CU and a DU. A plurality of DUs may be controlled by one CU in a centralized manner. Each DU is associated with at least one cell. In embodiments of this application, when a serving cell of a terminal switches from a source cell to a target cell, the source cell and the target cell may belong to different CUs. This is referred to as inter-CU handover. Alternatively, the source cell and the target cell belong to a same CU and different DUs. This is referred to as inter-DU handover. Alternatively, the source cell and the target cell belong to a same CU and a same DU. In this case, handover of the terminal involves neither inter-CU or inter-DU.

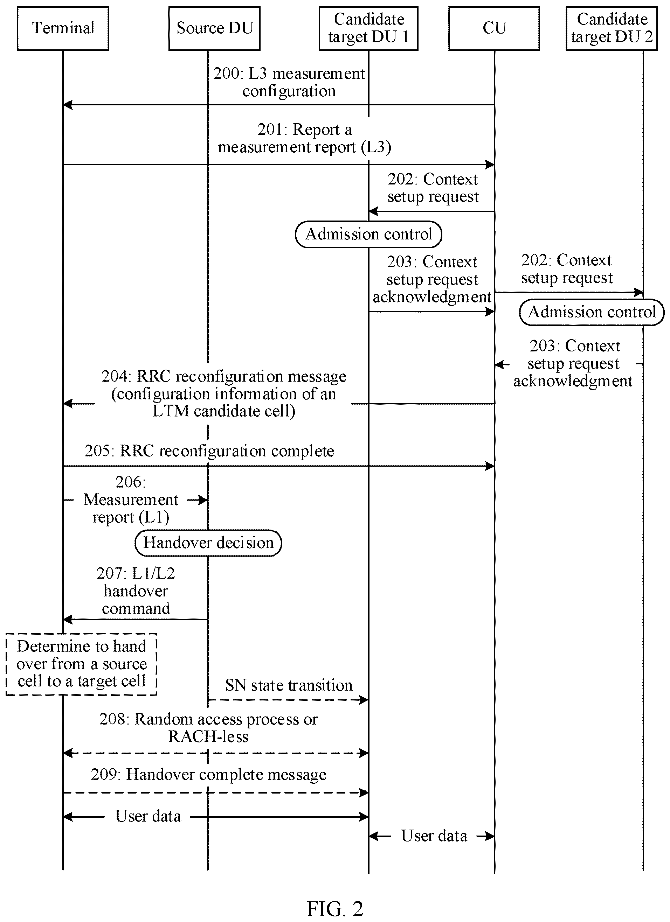

As shown in FIG. 2, inter-DU handover is used as an example to provide a handover procedure, including the following steps.

Step 200: A CU sends an L3 measurement configuration to a terminal.

Step 201: The terminal reports an L3 measurement report to the CU based on the L3 measurement configuration.

For example, the terminal measures a reference signal based on the L3 measurement configuration, to obtain an L3 measurement result. For example, the reference signal may be a synchronization signal/physical broadcast channel block (SS/PBCH Block, SSB), a channel state information reference signal (channel state information-reference signal, CSI-RS), or the like. The terminal reports the L3 measurement report to the CU. The L3 measurement report includes the L3 measurement result.

Step 202: The CU determines, based on the L3 measurement report reported by the terminal, that L1/L2 handover needs to be performed; and the CU sends a terminal context setup request to at least one candidate target DU. The candidate target DU may also be referred to as a candidate DU.

In the procedure in FIG. 2, an example in which the CU sends the terminal context setup request to two candidate target DUs is used, and the two candidate target DUs are respectively referred to as a candidate target DU 1 and a candidate target DU 2.

Step 203: The candidate target DU performs admission control. If the candidate target DU determines that access of the terminal is allowed, the candidate target DU returns a context setup request acknowledgment message to the CU, where the context setup request acknowledgment message includes configuration information of an LTM candidate cell.

Step 204: The CU sends an RRC reconfiguration message to the terminal, where the RRC reconfiguration message includes the configuration information of the LTM candidate cell. Optionally, the RRC reconfiguration message further includes L1 measurement configuration information.

Step 205: The terminal sends an RRC reconfiguration complete message to the CU.

Step 206: The terminal sends an L1 measurement report to a source DU, where the L1 measurement report includes an L1 measurement result.

In an implementation, the LTM candidate cell configured in step 203 includes at least one candidate cell. The terminal may measure the reference signal based on the L1 measurement configuration information for each candidate cell in the LTM candidate cell, and determine an L1 measurement result of each candidate cell. The terminal sends the L1 measurement report to the source DU based on reporting configuration information in the L1 measurement configuration. The L1 measurement report includes the L1 measurement result corresponding to each candidate cell in the LTM candidate cell. The source DU makes a handover decision based on the L1 measurement report reported by the terminal, and determines to trigger LTM handover. The source DU may select a cell from the LTM candidate cell based on the L1 measurement report reported by the terminal, where the cell is used as a target cell for the LTM handover. For example, a corresponding candidate cell whose quality of a measurement result included in the L1 measurement report is greater than a preset threshold may be selected from the LTM candidate cell as the target cell.

Step 207: The source DU sends an L1/L2 handover command to the terminal, where the handover command includes information about the target cell. Optionally, the information about the target cell includes a configuration identifier of the target cell.

The terminal determines to hand over from a source cell to the target cell. Optionally, the source DU sends a sequence number state transition to the candidate target DU 1.

Optionally, in step 208, the terminal synchronizes with a target DU to which the target cell belongs.

For example, the synchronization process may be implemented by using a random access process (random access channel, RACH), or may be implemented by using another process, for example, RACH-less. This is not limited.

It should be noted that, in the procedure in FIG. 2, an example in which the target DU to which the target cell belongs is the candidate target DU 1 is used for description.

Optionally, in step 209, the terminal sends a handover complete message to the candidate target DU 1, where the handover complete message may be RRC reconfiguration complete, a cell-radio network temporary identifier (cell-radio network temporary identifier, C-RNTI) MAC CE, or the like.

Through the foregoing process, a serving cell of the terminal switches from the source cell to the target cell. When a CU receives user data of the terminal from a core network, the CU sends the user data to the candidate target DU 1, and the candidate target DU 1 sends the user data to the terminal via the target cell.

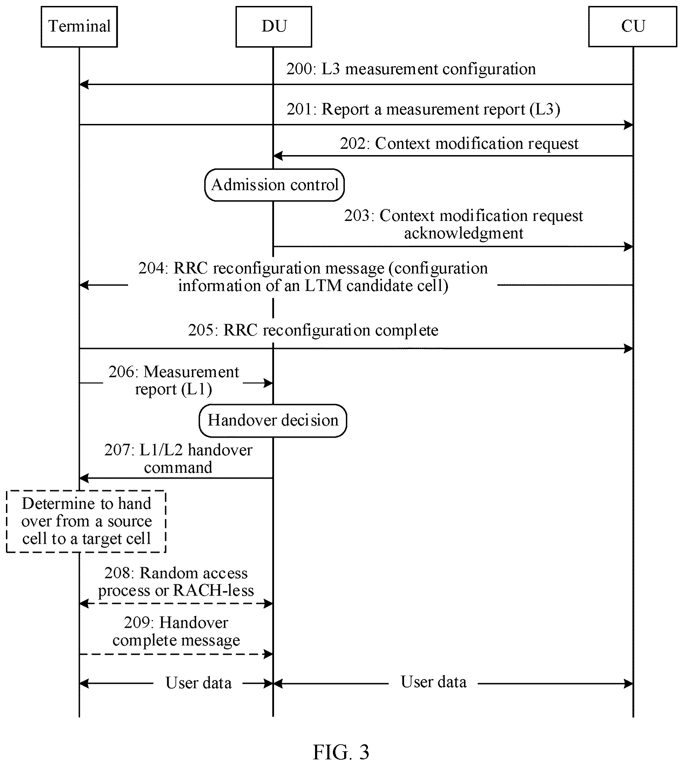

As shown in FIG. 3, an embodiment of this application further provides a handover procedure. In the handover procedure in FIG. 3, a source cell and a target cell belong to a same CU and a same DU. Because a source DU and a target DU are a same DU, differences from the inter-DU handover in FIG. 2 lie in step 202 and step 203. Specifically, in FIG. 3, step 202 is that the CU sends a terminal context modification request to a DU, and step 203 is that the DU sends a terminal context modification acknowledgment to the CU.

As described above, in step 204, the CU sends an RRC reconfiguration message to the terminal, where the RRC reconfiguration message includes configuration information of the LTM candidate cell, and the configuration information of the LTM candidate cell includes a configuration of one or more LTM candidate cells. In a design, the configuration information of the LTM candidate cell may be a full configuration or a delta configuration. The delta configuration is a delta configuration based on a first reference configuration.

The configuration of the LTM candidate cell includes at least a cell group configuration, and optionally may further include a measurement configuration and a radio bearer configuration. The first reference configuration includes at least a cell group configuration, and optionally may further include a measurement configuration and a radio bearer configuration.

Optionally, if the LMT candidate cell is a delta configuration, the configuration information of the LTM candidate cell included in step 204 includes the first reference configuration and a delta configuration that is of each candidate cell and that is based on the first reference configuration. In step 207, the source DU sends an L1/L2 handover command to the terminal, where the L1/L2 handover command includes information about the target cell. The terminal determines configuration information of the target cell in the configuration information of the LMT candidate cell. The terminal applies a configuration of the target cell based on the configuration information of the target cell. In a current handover design, when the configuration of the target cell is a delta configuration, the terminal determines the configuration of the target cell based on a configuration of the source cell and the configuration of the target cell. In other words, the terminal directly applies a delta configuration of the target cell based on a source configuration. However, as described in step 204, if a delta configuration of a candidate target cell (including the target cell) is a configuration based on the first reference configuration, and the terminal directly applies the delta configuration of the target cell based on the configuration of the source cell according to the current handover design, the determined or applied configuration of the target cell is inaccurate, resulting in a handover failure. In addition, when the LMT candidate cell is a delta configuration, if the terminal does not apply the configuration of the target cell according to the current handover design, how the terminal applies the configuration of the target cell in LTM is unclear.

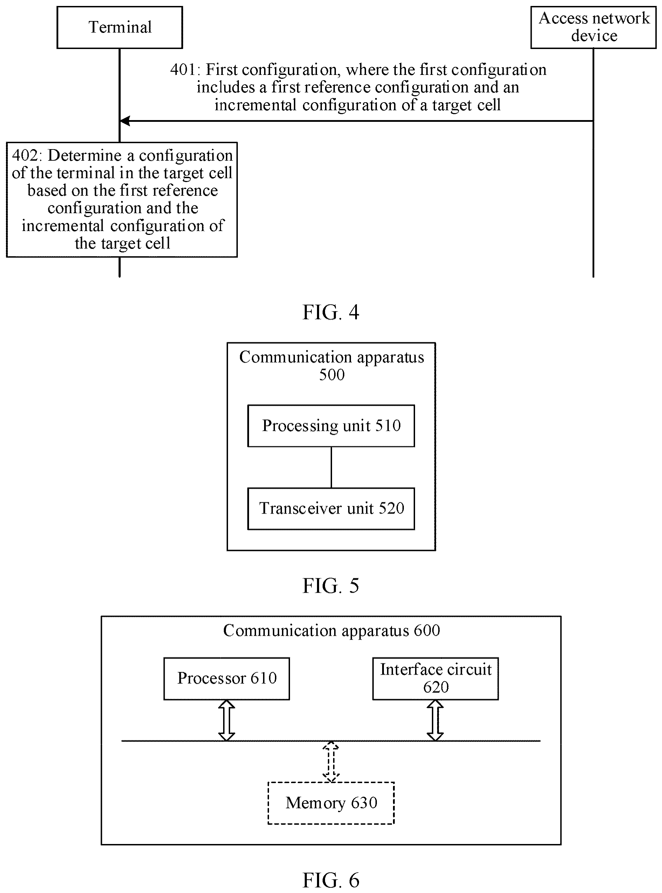

In embodiments of this application, the terminal apparatus determines, based on the first reference configuration and the delta configuration of the target cell, the configuration of the target cell for handover. The configuration of the target cell determined by the terminal is accurate, thereby improving a handover success rate. The terminal apparatus is an apparatus used in a terminal, and may be a terminal, or a chip, a circuit, or the like used in the terminal. The access network device may be an access network device, or a chip, a circuit, or the like used in the access network device. In the following descriptions, an example in which the terminal apparatus is a terminal and the access network device is specifically an access network device is used for description. As shown in FIG. 4, a procedure is provided, and includes the following steps.

Step 401: An access network device sends a first configuration to a terminal. Correspondingly, the terminal receives the first configuration.

The first configuration includes a first reference configuration and a delta configuration of a target cell, and the first reference configuration is related to the delta configuration of the target cell.

Step 402: The terminal determines a configuration of the terminal in the target cell based on the first reference configuration and the delta configuration of the target cell.

Determining the configuration of the terminal in the target cell includes: The terminal determines a radio configuration of the terminal based on the first reference configuration and the delta configuration of the target cell, where the radio configuration of the terminal includes a radio configuration of the terminal in the target cell.

Optionally, before step 402, the method further includes: The terminal receives a handover command from the access network device. For example, the handover command may indicate the terminal to hand over from a source cell to the target cell. For example, the handover command may include information about the target cell. Alternatively, the terminal meets a handover condition. In other words, the terminal may determine, by itself based on the handover condition, whether to hand over from the source cell to the target cell. The handover condition may be specified in a protocol, preset, configured by another device for the terminal, or the like. This is not limited. The another device may be the access network device, a core network device, or the like. For example, when meeting the handover condition, the terminal may determine to hand over from the source cell to the target cell. For example, the terminal finds, through measurement, that a signal measurement quantity of the source cell is less than a threshold and a signal measurement quantity of the target cell is greater than or equal to the threshold. In this case, the terminal may determine that the terminal meets the handover condition, and hands over from the source cell to the target cell. In other words, the handover condition may be that the signal measurement quantity of the source cell is less than the threshold, the signal measurement quantity of the target cell is greater than or equal to the threshold, or the like.

In this embodiment of this application, the terminal determines the configuration of the target cell based on the first reference configuration and the delta configuration of the target cell. The first reference configuration includes a cell group configuration. Optionally, the first reference configuration further includes a measurement configuration, a radio bearer configuration, and/or the like. The cell group configuration, the measurement configuration, or the radio bearer configuration may include one or more fields or information elements. Each field or information element has an existence condition. The existence condition may be mandatory existence, optional existence, or conditional existence. For example, in a case of optional existence, the existence condition may be Need M, Need N, Need R, or Need S. Specific meanings of Need M, Need N, Need R, or Need S are the same as those in a protocol. For example:

Need M: If the first reference configuration received by the terminal from the access network device includes the field or the information element, a value of the field or the information element is used. If the configuration of the terminal from the access network device does not include the field or the information element, a current value is retained.

Need N: If the first reference configuration received by the terminal from the access network device includes the field or the information element, a value of the field or the information element is used. If the first reference configuration received by the terminal from the access network device does not include the field or the information element, the terminal does not perform any operation, that is, does not use the field or the information element.

Need R: If the first reference configuration received by the terminal from the access network device includes the field or the information element, a value of the field or the information element is used. If the first reference configuration received by the terminal from the access network device does not include the field or the information element, the terminal releases a current value of the field or the information element.

The delta configuration of the target cell includes a cell group configuration. Optionally, the delta configuration of the target cell may further include a measurement configuration and/or a radio bearer configuration.

For example, the cell group configuration, the measurement configuration, or the radio bearer configuration may include one or more fields or information elements. Each field or information element has an existence condition. The existence condition may be mandatory existence, optional existence, or conditional existence. In a case of optional existence, the existence condition may be Need M, Need N, Need R, or Need S. Specific meanings of Need M, Need N, Need R, or Need S are the same as those in a protocol.

The delta configuration of the target cell is a delta configuration based on the first reference configuration. It may be understood that the delta configuration of the target cell is a reconfiguration based on the first reference configuration. The following uses an example to describe an understanding of the delta configuration of the target cell.

For example, an existence condition of a field or an information element 1 is Need M, and the first reference configuration includes the field or the information element 1. If the delta configuration of the target cell also includes the field or the information element 1, a value of a first field in the first reference configuration is replaced with a value of a first field in the delta configuration of the target cell. If the first reference configuration includes the field or the information element 1, and the delta configuration of the target cell does not include the field or the information element 1, a value in the first reference configuration is used for a field 1 in the configuration of the terminal in the target cell.

For example, an existence condition of a field or an information element 2 is Need R. If the first reference configuration includes the field or the information element 2, and if the delta configuration of the target cell also includes the field or the information element 2, a second field in the first reference configuration is replaced with a value of a second field in the delta configuration of the target cell. If the first reference configuration includes the field or the information element 2, and the delta configuration of the target cell does not include the field or the information element 2, the configuration of the terminal in the target cell does not include the field or the information element 2.

For example, an existence condition of a field or an information element 3 is Need N. If the first reference configuration includes the field or the information element 3, and if the delta configuration of the target cell also includes the field or the information element 3, a third field in the first reference configuration is replaced with a value of a third field in the delta configuration of the target cell. If the first reference configuration includes the field or the information element 3, and the delta configuration of the target cell does not include the field or the information element 3, the configuration of the terminal in the target cell does not include the field or the information element 3, and the terminal does not need to perform any operation based on the field or the information element 3.

For example, if the delta configuration of the target cell further includes a field or an information element 4, and the first reference configuration includes the field or the information element 4, the configuration of the terminal in the target cell includes the field or the information element 4 in the delta configuration of the target cell.

### [Embodiment 1]

In an implementation, in step 402, that the terminal determines the configuration of the terminal in the target cell based on the first reference configuration and the delta configuration of the target cell includes: The terminal applies the first reference configuration, and the terminal applies the delta configuration of the target cell.

That the terminal applies the first reference configuration includes but is not limited to the following process: The terminal releases a current dedicated radio configuration of the terminal except at least one of a master cell group (master cell group, MCG) C-RNTI, an access stratum security configuration associated with a master key, a radio bearer configuration, an RLC bearer configuration, a secondary cell (secondary cell, SCell) configuration, and a logged measurement configuration.

Optionally, that the terminal applies the first reference configuration may further include at least one of the following: The terminal applies a default layer 1 parameter value except a parameter provided by a system information block 1 (system information block 1, SIB1), and applies a default MAC configuration for a cell group.

Optionally, that the terminal applies the first reference configuration further includes: if the first reference configuration includes a measurement configuration, performing the measurement configuration. That the terminal performs the measurement configuration includes: releasing/clearing a current terminal measurement configuration of a related cell group, including at least one of releasing a measurement configuration report, releasing a measurement configuration variable, stopping any running periodic reporting, stopping a timer T321, stopping a timer T322, or the like. Optionally, that the terminal performs the measurement configuration may further include: if the measurement configuration of the first reference configuration includes a measurement object addition/modification list, performing measurement object addition/modification; if the measurement configuration includes a measurement object deletion list, performing measurement object deletion; if the measurement configuration includes a measurement report configuration addition/modification list, performing measurement report configuration addition/modification; if the measurement configuration includes a measurement report configuration deletion list, performing measurement report configuration deletion; if the measurement configuration includes a measurement quantity configuration, performing a measurement quantity configuration process; if the measurement configuration includes a measurement identifier addition/modification list, performing measurement identifier addition/modification; or if the measurement configuration includes a measurement identifier deletion list, performing measurement identifier deletion.

That the terminal device applies the delta configuration of the target cell includes at least one of the following: if the delta configuration of the target cell includes a radio configuration, determining the radio configuration of the terminal based on the delta configuration of the target cell; if the delta configuration of the target cell includes a MAC configuration for a cell group, configuring a MAC entity of the cell group; or if the target cell configuration includes a measurement configuration, performing a measurement configuration process. It should be understood that the terminal device applies the delta configuration of the target cell based on application of the first reference configuration. To be specific, the terminal first applies the first reference configuration, and then applies the delta configuration of the target cell.

In step 402, determining the radio configuration of the terminal in the target cell based on the first reference configuration and the delta configuration of the target cell, or determining the radio configuration of the terminal in the target cell based on the delta configuration of the target cell may be expressed in the following form:

For example, a first variable includes a radio configuration of the first reference configuration. The first variable is updated based on the delta configuration of the target cell, where an updated first variable includes the radio configuration of the target cell; and the radio configuration of the terminal in the target cell is determined based on the updated first variable.

The first variable includes the first reference configuration, and the terminal updates the first variable based on the first reference configuration and based on the delta configuration of the target cell, where the updated first variable includes the radio configuration of the target cell. In this embodiment of this application, the first reference configuration includes a radio configuration list, and the radio configuration list includes at least one radio configuration. For example, the first reference configuration includes an RLC bearer configuration addition/modification list, and the RLC bearer configuration addition/modification list includes at least one RLC bearer configuration. For another example, the first reference configuration includes a radio bearer configuration, the radio bearer configuration includes a data radio bearer (data radio bearer, DRB) addition/modification list, and the DRB addition/modification list includes at least one DRB configuration. The delta configuration of the target cell is a delta configuration based on the first reference configuration. The delta configuration of the target cell may include a first list and/or a second list. For example, the first list may be a radio configuration addition/modification list, and the second list may be a radio configuration release list. That the first variable is updated based on the delta configuration of the target cell includes at least one of the following 1 to 3:

### 1. Modify

If the first variable includes a first radio configuration, the first list includes a second radio configuration, the first list is a list in the delta configuration of the target cell, and an identifier of the first radio configuration is the same as an identifier of the second radio configuration, the first radio configuration in the first variable is updated to the second radio configuration.

Optionally, in an implementation, updating the first radio configuration in the first variable to the second radio configuration may be reconfiguring the first radio configuration based on the second radio configuration.

Optionally, in another implementation, updating the first radio configuration the first variable to the second radio configuration may be: determining a complete configuration of the second radio configuration based on the first radio configuration and the second radio configuration, and replacing the first radio configuration with the complete configuration of the second radio configuration.

### 2. Add

If the first list includes a third radio configuration, and the first variable includes a radio configuration other than the third radio configuration, the third radio configuration is added to the first variable.

### 3. Delete

If the first variable includes a fourth radio configuration, the second list includes a fifth radio configuration, the second list is a list in the delta configuration of the target cell, and an identifier of the fourth radio configuration is the same as an identifier of the fifth radio configuration, the fourth radio configuration is released in the first variable.

For example, the delta configuration of the target cell includes the first list and the second list, where the first list is a radio configuration addition/modification list, and the second list is a radio configuration release list. The radio configuration addition/modification list is mainly for adding and/or modifying a radio configuration in the first reference configuration. The first variable before the update includes the first reference configuration, and a radio configuration (for example, the first radio configuration) included in the first variable and a radio configuration (for example, the second radio configuration) included in the addition/modification list have a same identifier. In this case, the first radio configuration in the first variable is updated to the second radio configuration. Alternatively, if a radio configuration (for example, the third radio configuration) included in the radio configuration addition/modification list is not included in the first variable, the third radio configuration is added to the first variable. Alternatively, if a radio configuration (for example, the fourth radio configuration) included in the radio configuration release list and a radio configuration (for example, the fifth radio configuration) included in the first variable before the update have a same identifier, the fourth radio configuration is released in the first variable. Through the foregoing processing such as modification, addition, and/or deletion, the updated first variable includes the complete radio configuration of the target cell.

For example, the first reference configuration includes a radio configuration 1 and a radio configuration 4, and the delta configuration of the target cell includes a radio configuration addition/modification list and a radio configuration release list. The radio configuration addition/modification list includes a radio configuration 1, a radio configuration 2, and a radio configuration 3. The radio configuration release list includes a radio configuration 4. In this case:

If the radio configuration 1 included in the radio configuration addition/modification list included in the delta configuration of the target cell and the radio configuration 1 included in the first reference configuration (that is, the first variable) have a same identifier, the radio configuration 1 in the first variable may be updated to the radio configuration 1 in the radio configuration addition/modification list of the target cell. The radio configuration 1 in the first variable corresponds to an example of the first radio configuration described above, and the radio configuration 1 in the radio configuration addition/modification list in the delta configuration of the target cell corresponds to an example of the second radio configuration described above. It may be understood that the radio configuration 1 in the first reference configuration and the radio configuration 1 in the delta configuration of the target cell have a same radio configuration identifier, but may have specific different radio configuration parameters or fields. For example, if the radio configuration is an RLC bearer configuration, the radio configuration 1 is an RLC bearer configuration whose logical channel identifier (logical channel ID, LCID) value is 1, the radio configuration 2 is an RLC bearer configuration whose LCID value is 2, the radio configuration 3 is an RLC bearer configuration whose LCID value is 3, and the radio configuration 4 is an RLC bearer configuration whose LCID value is 4. In another example, if the radio configuration is a DRB configuration, the radio configuration 1 is a DRB configuration whose DRB identifier is 1, the radio configuration 2 is a DRB configuration whose DRB identifier is 2, the radio configuration 3 is a DRB configuration whose DRB identifier is 3, and the radio configuration 4 is a DRB configuration whose DRB identifier is 4.

If the radio configuration 2 and the radio configuration 3 included in the radio configuration addition/modification list are not included in the first reference configuration (that is, the first variable), the radio configuration 2 and the radio configuration 3 are added to the first variable. The radio configuration 2 and the radio configuration 3 correspond to examples of the third radio configuration described above.

Because the radio configuration release list includes the radio configuration 4, and the first reference configuration also includes the radio configuration 4, the radio configuration 4 is deleted from the first variable. The radio configuration 4 corresponds to an example of the fourth radio configuration described above.

Through the foregoing update process, the updated first variable includes the complete radio configuration of the target cell. In the foregoing example, the complete radio configuration of the target cell included in the updated first variable is the radio configuration 1, the radio configuration 2, and the radio configuration 3.

That the terminal determines the radio configuration of the terminal in the target cell based on the updated first variable includes at least one of the following 1 to 3:

### 1. Reconfigure

If the updated first variable includes a sixth radio configuration, a radio configuration of the source cell includes a seventh radio configuration, and an identifier of the sixth radio configuration is the same as an identifier of the seventh radio configuration, the terminal reconfigures the seventh radio configuration based on the sixth radio configuration.

In an implementation, reconfiguring the seventh radio configuration based on the sixth radio configuration means replacing the sixth radio configuration of the terminal with the seventh radio configuration. In other words, in the radio configuration of the terminal, the sixth radio configuration is replaced with the seventh radio configuration.

### 2. Create

If the updated first variable includes an eighth radio configuration, and the radio configuration of the source cell includes a configuration other than the eighth radio configuration, the terminal creates the eighth radio configuration.

### 3. Release

If the radio configuration of the source cell includes a ninth radio configuration, and the updated first variable includes a configuration other than the ninth radio configuration, the terminal releases the ninth radio configuration.

For example, the updated first variable includes the complete configuration of the target cell. The updated first variable includes a radio configuration list of the target cell. For example, the radio configuration list includes a radio configuration 1, a radio configuration 2, and a radio configuration 3. A radio configuration list of the source cell includes a radio configuration 3 and a radio configuration 4.

The radio configuration list of the source cell includes the radio configuration 3, and the radio configuration list of the target cell also includes the radio configuration 3. In this case, a radio configuration 3 (the radio configuration 3 is a radio configuration 3 of the terminal in the source cell) of the terminal may be reconfigured based on the radio configuration 3 of the target cell. The radio configuration 3 of the target cell is an example of the sixth radio configuration described above, and the radio configuration 3 of the source cell is an example of the seventh radio configuration described above. It may be understood that the radio configuration 3 of the target cell and the radio configuration 3 of the source cell have a same identifier, but may correspond to specific different radio configuration parameters or fields.

The foregoing example is still used. The radio configuration 1 and the radio configuration 2 of the target cell are not included in the radio configuration of the source cell. In this case, the radio configuration 1 and the radio configuration 2 may be created in the radio configuration of the terminal. The radio configuration 1 and the radio configuration 2 of the target cell are examples of the eighth radio configuration described above.

The foregoing example is still used. The radio configuration of the source cell includes the radio configuration 4, and the radio configuration of the target cell does not include the radio configuration 4. In this case, the radio configuration 4 is released in the radio configuration of the terminal. The radio configuration 4 of the source cell is an example of the ninth radio configuration described above.

In a design, in a cell handover process, the terminal first releases the radio configuration of the source cell, and then creates the radio configuration of the target cell. For example, in the foregoing example, the terminal first releases the radio configuration 3 and the radio configuration 4 of the source cell, and then creates the radio configuration 1, the radio configuration 2, and the radio configuration 3 of the target cell. For the radio configuration 3, if the foregoing manner of first release and then create is used, handover efficiency and a handover delay are affected, and service continuity is affected. In this embodiment of this application, for the radio configuration 3, a reconfiguration manner is used, to be specific, an entity corresponding to the radio configuration 3 is not released, and the entity is only reconfigured based on the radio configuration 3 of the target cell, thereby improving handover efficiency and reducing a handover delay. Further, in a cell handover process, if the entity corresponding to the radio configuration 3 includes to-be-transmitted service data, the corresponding entity is released. This may cause a loss of the to-be-transmitted service data and cause discontinuity of service data. However, in this embodiment of this application, the corresponding entity is not released, and only the corresponding radio configuration is modified. After cell handover succeeds, the service data in the entity may continue to be transmitted, thereby ensuring service continuity.

In this embodiment of this application, the radio configuration of the terminal includes at least one of the following: a radio bearer (radio bearer, RB) configuration, an RLC bearer configuration, a secondary cell configuration, or the like. It should be noted that, in this embodiment of this application, the first variable is for determining or storing the radio configuration of the target cell. For example, if the radio configuration of the target cell is an RLC bearer configuration, the first variable is for storing or determining the RLC bearer configuration of the target cell. Alternatively, if the radio configuration of the target cell is a DRB configuration, the first variable is for storing or determining the DRB configuration of the target cell. Alternatively, if the radio configuration of the target cell is a signaling radio bearer (signaling radio bearer, SRB), the first variable is for storing or determining the SRB configuration of the target cell. Alternatively, if the radio configuration of the target cell is a secondary cell SCell, the first variable is for storing or determining the SCell configuration of the target cell.

It may be understood that, in this embodiment of this application, a name of the "variable" is not limited. Other parameters that can implement a "variable" function also fall within the protection scope of this embodiment of this application. For example, the variable may be replaced with "list", "configuration", "temporary list", "intermediate state", and the like maintained by the terminal. This is not limited.

An example in which the radio configuration of the terminal is an RLC bearer configuration is used. This embodiment of this application provides a cell handover solution. A main idea of the solution is that when the terminal receives a handover command, the terminal first applies the first reference configuration. Optionally, the first reference configuration is a complete configuration, a full configuration, or the like. It may be understood that the first reference configuration includes a complete configuration parameter, and is not a delta configuration based on a configuration. Then, the terminal applies the delta configuration of the target cell based on the first reference configuration. Optionally, for the RLC bearer configuration, the terminal determines the first variable, where the first variable includes the RLC bearer configuration of the LTM target cell. When the terminal receives the handover command and applies the delta configuration of the target cell, the terminal compares a current configuration of the terminal with the RLC bearer configuration included in the first variable, and releases, adds, and/or modifies the RLC bearer configuration. This solution includes the following steps.

1: The terminal receives an RRC reconfiguration message from the access network device, where the RRC reconfiguration message includes the configuration information of the LTM candidate cell.

In an implementation, the RRC reconfiguration message includes an LTM configuration. The LTM configuration includes an LTM candidate cell configuration, and optionally, further includes the first reference configuration. The LTM candidate cell configuration includes configuration information of one or more LTM candidate cells. Configuration information of each LTM candidate cell includes an LTM candidate cell configuration identifier and a configuration of the LMT candidate cell.

Optionally, the LTM candidate cell configuration may be configured by using an LTM candidate cell addition/modification list and/or an LTM candidate cell release list. The LTM candidate cell addition/modification list includes configuration information of one or more candidate cells. Configuration information of each candidate cell includes an LTM candidate cell configuration identifier and a configuration of the LMT candidate cell. The configuration of the LTM candidate cell is a delta configuration relative to the first reference configuration. For example, if the configuration of the LTM candidate cell is a delta configuration relative to the first reference configuration, the configuration of the LTM candidate cell may be referred to as a delta configuration of the LTM candidate cell. The LTM candidate cell release list includes an LTM candidate cell configuration identifier.

Optionally, if the RRC reconfiguration message includes the first reference configuration, the terminal stores the first reference configuration.

Optionally, the terminal maintains or stores a third variable, where the third variable is for determining an LTM candidate cell configuration configured by the access network device for the terminal. For example, the third variable may be referred to as an LMT candidate configuration variable. The third variable includes an LMT candidate cell configuration configured by the access network device for the terminal, and optionally, may be an LTM candidate cell list, where the LTM candidate cell list includes configuration information of at least one LTM candidate cell.

Optionally, the third variable may further include the first reference configuration. In this embodiment of this application, when receiving the RRC reconfiguration message, the terminal updates the LTM candidate cell configuration of the terminal or the first reference configuration based on the LTM configuration included in the RRC reconfiguration message. For example:

### (1) LTM candidate cell deletion

If the RRC reconfiguration message includes LTM candidate cell release information, the terminal releases the LTM candidate cell based on the LTM candidate cell release information. For example, if the LTM candidate cell release information in the RRC reconfiguration message includes an LTM candidate cell configuration identifier, the terminal releases an LTM candidate cell configuration.

Optionally, in an implementation, the LTM candidate cell release list includes a first LTM candidate cell configuration identifier, and the terminal device releases a first LTM candidate cell configuration.

Optionally, in another implementation, the LTM candidate cell release list includes a first LTM candidate cell, and the third variable includes a second LTM candidate cell. If a configuration identifier of the first LTM candidate cell is the same as that of the second LTM candidate cell, the second LTM candidate cell and a corresponding configuration of the second LTM candidate cell are deleted from the third variable.

### (2) LTM candidate cell addition/modification

If the RRC reconfiguration message includes LTM candidate cell addition/modification information, the terminal adds or modifies an LTM candidate cell based on the LTM candidate cell addition/modification information. For example, if the LTM candidate cell addition/modification information in the RRC reconfiguration message includes a third LTM candidate cell configuration identifier and configuration information associated with the third LTM candidate cell configuration identifier, when the terminal receives the RRC reconfiguration message, if a current configuration of the terminal does not include the third LTM candidate cell configuration identifier, the terminal adds a third LTM candidate cell. For another example, if the LTM candidate cell addition/modification information in the RRC reconfiguration message includes a fourth LTM candidate cell configuration identifier and configuration information associated with the fourth LTM candidate cell configuration identifier, when the terminal receives the RRC reconfiguration message, if a current configuration of the terminal includes the fourth LTM candidate cell configuration identifier, the terminal updates, based on a fourth LTM candidate cell configuration included in the LTM candidate cell addition/modification information, a fourth LTM candidate cell configuration included in the current configuration of the terminal. In other words, the fourth LTM candidate cell configuration included in the current configuration of the terminal is replaced with the fourth LTM candidate cell configuration included in the LTM candidate cell addition/modification information in the RRC reconfiguration message.

Optionally, in another implementation, the LTM candidate cell addition/modification list includes a third LTM candidate cell, and the third variable includes a fourth LTM candidate cell. If a configuration identifier of the third LTM candidate cell is the same as a configuration identifier of the fourth LTM candidate cell, in the third variable, a configuration of the fourth LTM candidate cell is replaced with a configuration of the third LTM candidate cell.

If the LTM candidate cell addition/modification list includes a fifth LMT candidate cell, and the third variable includes a configuration of another cell than the fifth LMT candidate cell, the fifth LMT candidate cell and a configuration corresponding to the fifth LMT candidate cell are added to the third variable.

### (3) First reference configuration update

Optionally, when the access network device needs to update the first reference configuration, the access network device may include a full configuration of the first reference configuration or the delta configuration of the first reference configuration. The delta configuration of the first reference configuration is a delta configuration based on the first reference configuration that is previously stored by the terminal. Optionally, in the reconfiguration message for updating the first reference configuration, the access network device may include an indication indicating the terminal to release a currently stored LTM candidate cell configuration. Optionally, the access network device may provide an LTM candidate cell configuration again based on a new reference.

The terminal receives, from the access network device, the reconfiguration message for updating the first reference configuration, and the terminal updates the stored first reference configuration. Optionally, the terminal releases a previously stored LTM candidate cell configuration based on an indication of the access network device, and stores a latest LTM candidate cell configuration based on a new reference configuration, or the terminal directly stores a new LTM candidate cell configuration provided by a network.

In an implementation, a process in which the terminal updates, when receiving the RRC reconfiguration message, the LTM candidate cell configuration of the terminal or the first reference configuration based on the LTM configuration included in the RRC reconfiguration message is a process in which the terminal updates the third variable.

2: The terminal receives the LTM handover command from the access network device, where the LTM handover command includes the information about the target cell. The target cell in the LTM handover command is one of LTM candidate cells configured by the access network device for the terminal.

3: The terminal performs LTM handover.

The terminal hands over from the source cell to the target cell based on the information about the target cell included in the LTM handover command.

Optionally, the configuration of the LTM candidate cell is a delta configuration relative to the first reference configuration. For example, the configuration of the LTM candidate cell may be referred to as the delta configuration of the LTM candidate cell, and a configuration of the target cell for handover may be referred to as the delta configuration of the target cell.

Optionally, the terminal determines the delta configuration of the target cell in the LMT candidate cell configuration included in the third variable.

A specific process in which the terminal determines the configuration of the terminal in the target cell based on the first reference configuration and the delta configuration of the target cell, or the terminal determines an RLC bearer of the terminal in the target cell based on the first reference configuration and the delta configuration of the target cell includes:

It should be noted that in this embodiment of this application, the RLC bearer configuration is for configuring an RLC entity, a corresponding MAC logical channel, and a radio bearer of an associated service. The RLC bearer configuration of the LTM target cell includes configuration information of at least one RLC bearer. Configuration information of each RLC bearer includes at least a logical channel identifier of the RLC bearer. For example, a value of the logical channel identifier may be 1 to 65855. Optionally, the RLC bearer configuration may further include at least one of the following: a serving radio bearer, an RLC re-establishment indication, an RLC configuration, a MAC logical channel configuration, and the like.

(1) The terminal applies the first reference configuration.

The terminal releases current configuration information of the terminal except at least one of an MCG C-RNTI, an access stratum security configuration, an RB configuration, an RLC bearer configuration, an SCell configuration, or a logged measurement configuration.

Optionally, the terminal applies a default L1 parameter value, except a parameter provided in a SIB1.

Optionally, the terminal applies a default MAC configuration for a cell group.

If the first reference configuration includes the cell group configuration, performing a cell group configuration process, includes: if the LTM process is running, and if the terminal is applying the first reference configuration, setting the first variable to the RLC bearer configuration included in the first reference configuration. Optionally, the first reference configuration may include an RLC bearer addition/modification list, and the first variable is set to an RLC bearer configuration included in the RLC bearer addition/modification list in the first reference configuration. For example, the first variable may be referred to as an RLC bearer configuration list variable.

Optionally, if the first reference configuration includes a measurement configuration, a measurement configuration process is performed.

Optionally, if the first reference configuration includes a dedicated non-access stratum (non-access stratum, NAS) message list, each information element in the NAS message list is forwarded to an upper layer.

Optionally, if the first reference configuration includes dedicated system information, a behavior of receiving the system information is performed.

(2) The terminal applies the delta configuration of the target cell.

In an implementation, the terminal applies the delta configuration of the target cell, including at least one of (2.1) to (2.4).

(2.1) If the delta configuration of the target cell includes a cell group configuration, a cell group configuration process is performed, including either of (2.1.1) and (2.1.2).

(2.1.1) If the LTM process is running, and if the terminal is applying the target cell configuration, the terminal updates the first variable based on the delta configuration of the target cell; and the terminal performs the RLC bearer configuration process. Otherwise, if the LMT process is not running and the cell group configuration includes an RLC bearer release list, an RLC bearer release process is performed. If the cell group configuration includes an RLC bearer addition/modification list, an RLC bearer addition/modification process is performed.

That if the LTM process is running, and if the terminal is applying the target cell configuration, the terminal updates the first variable based on the delta configuration of the target cell includes:

The delta configuration of the target cell includes the RLC bearer addition/modification list and/or the RLC bearer release list. The RLC bearer addition/modification list includes configuration information of one or more RLC bearers that need to be added and/or modified relative to the first reference configuration. The configuration information of each RLC bearer includes at least a logical channel identifier of the RLC bearer and a configuration of the RLC bearer. Optionally, the configuration of the RLC bearer may further include at least one of the following: a serving radio bearer, an RLC re-establishment indication, an RLC configuration, and a MAC logical channel configuration. The RLC bearer release list includes a logical channel identifier of an RLC bearer that needs to be released relative to the first reference configuration. There is a correspondence between an RLC bearer and a logical channel, and the RLC bearer may be identified by using an LCID. In other words, an identifier of the RLC bearer may be an LCID. Specifically, at least one of the following is included:

If the RLC bearer release list in the delta configuration of the target cell includes an LCID value, and the LCID value is included in the first variable, an RLC bearer corresponding to the LCID value is deleted from the first variable. Deleting the RLC bearer corresponding to the LCID value includes deleting a configuration of the RLC bearer.

If the LCID value included in the first variable exists in the RLC bearer addition/modification list included in the delta configuration of the target cell, the configuration of the RLC bearer corresponding to the LCID in the first variable is replaced with a corresponding configuration in the delta configuration of the target cell.

If the LCID value included in the RLC bearer addition/modification list included in the delta configuration of the target cell does not exist in the first variable, configuration information of the RLC bearer is added to the first variable. That is, the LCID and the configuration of the corresponding RLC bearer are added to the first variable.

After the foregoing processing, the updated first variable includes a complete RLC bearer configuration of the target cell.

That the terminal performs the RLC bearer configuration process includes at least one of the following:

If a current RLC configuration of the terminal includes a first LCID value, and the first variable includes the first LCID value, where the first LCID value may mean that an LCID value is a first value, an RLC entity in the current configuration of the terminal is reconfigured based on an RLC bearer configuration corresponding to the first LCID value included in the first variable. Optionally, an RLC bearer corresponding to the first LCID value in the current configuration of the terminal and an RLC bearer corresponding to the first LCID value included in the first variable belong to a same cell group. That the RLC entity in the current configuration of the terminal is reconfigured may be understood as that the terminal replaces, based on the RLC bearer configuration corresponding to the first LCID value in the first variable, an RLC bearer configuration corresponding to the first LCID value in the current configuration of the terminal. Optionally, the terminal may further reconfigure a logical channel based on a MAC logical channel in the delta configuration of the target cell.

If the first variable includes a second LCID value, and no RLC bearer corresponding to the second LCID value exists in the current configuration of the terminal, where the second LCID value may mean that an LCID value is a second value, the terminal creates an RLC entity based on an RLC bearer configuration corresponding to the second LCID value included in the first variable.

If the current configuration of the terminal includes a third LCID value, but the first variable does not include the third LCID value, where the third LCID value may mean that an LCID value is a third value, in the current configuration of the terminal, an RLC entity corresponding to the third LCID value is released, and a corresponding logical channel is released.

(2.1.2) If a cell configuration includes a MAC configuration for a cell group, a MAC entity of the cell group is configured. For a process of configuring the MAC entity of the cell group, refer to descriptions in the protocol.

(2.2) If the delta configuration of the target cell includes a measurement configuration, a measurement configuration process is performed. For the measurement process, refer to descriptions in the protocol.

(2.3) If the delta configuration of the target cell includes a dedicated NAS message list, each information element in the list is forwarded to an upper layer.

(2.4) If the delta configuration of the target cell includes dedicated system information, a behavior of receiving the system information is performed. For the behavior of receiving the system information, refer to descriptions in the protocol.

4. The terminal performs a RACH or RACH-less process on the target cell.

In Embodiment 1, in a process in which the terminal performs the LTM cell handover, the terminal applies the first reference configuration and then applies the delta configuration of the target cell, so that the terminal can accurately apply the configuration of the target cell, and perform a process of handover to the target cell, thereby improving a handover success rate. Further, when the LTM target cell configuration is applied, for a configuration (for example, an RLC bearer, a radio bearer, and an SCell configuration) affecting service continuity, the first variable and a new processing process are introduced. The configuration of the source cell and the configuration of the target cell are compared, so that the terminal does not perform an unnecessary "release and then add" process for a configuration that affects service continuity and that is included in both the source cell and the target cell in a handover process, thereby improving LTM handover performance, and reducing a handover interruption and a handover delay.

### [Embodiment 2]

In an implementation, in step 402, that the terminal determines the configuration of the terminal in the target cell based on the first reference configuration and the delta configuration of the target cell includes: The terminal applies the first reference configuration, and the terminal applies the delta configuration of the target cell.

That the terminal applies the first reference configuration includes but is not limited to the following process: The terminal releases a current cell group configuration of the terminal in a current cell group configuration except at least one of an MCG C-RNTI or an RLC bearer configuration.

Optionally, that the terminal applies the first reference configuration may further include at least one of the following: The terminal applies a default layer 1 parameter value except a parameter provided by a SIB1, and applies a default MAC configuration for a cell group.

Optionally, that the terminal applies the first reference configuration further includes: if the first reference configuration includes a measurement configuration, performing the measurement configuration. That the terminal performs the measurement configuration may include: releasing/clearing a current terminal measurement configuration of a related cell group, including at least one of releasing a measurement configuration report, releasing a measurement configuration variable, stopping any running periodic reporting, stopping a timer T321, or stopping a timer T322. Optionally, that the terminal performs the measurement configuration may further include: if the measurement configuration of the first reference configuration includes a measurement object addition/modification list, performing measurement object addition/modification; if the measurement configuration includes a measurement object deletion list, performing measurement object deletion; if the measurement configuration includes a measurement report configuration addition/modification list, performing measurement report configuration addition/modification; if the measurement configuration includes a measurement report configuration deletion list, performing measurement report configuration deletion; if the measurement configuration includes a measurement quantity configuration, performing a measurement quantity configuration process; if the measurement configuration includes a measurement identifier addition/modification list, performing measurement identifier addition/modification; or if the measurement configuration includes a measurement identifier deletion list, performing measurement identifier deletion.

That the terminal applies the delta configuration of the target cell includes at least one of the following: if the delta configuration of the target cell includes a radio configuration, determining the radio configuration of the terminal based on the delta configuration of the target cell; if the delta configuration of the target cell includes a MAC configuration for a cell group, configuring a MAC entity of the cell group; or if the delta configuration of the target cell includes a measurement configuration, performing a measurement configuration process. It should be understood that the terminal device applies the delta configuration of the target cell based on application of the first reference configuration.

The process of determining the configuration of the terminal in the target cell based on the first reference configuration and the delta configuration of the target cell in step 402 includes: The terminal determines a second reference configuration based on a radio configuration in the first reference configuration; and determines the configuration of the terminal in the target cell based on the second reference configuration and the delta configuration of the target cell.

A process in which the terminal determines the second reference configuration based on the radio configuration in the first reference configuration includes at least one of the following:

If the first reference configuration includes a tenth radio configuration, a radio configuration of the source cell includes an eleventh radio configuration, and an identifier of the tenth radio configuration is the same as an identifier of the eleventh radio configuration, the eleventh radio configuration of the terminal is updated to the tenth radio configuration. Optionally, updating the eleventh radio configuration to the tenth radio configuration may be understood as replacing the eleventh radio configuration in a current configuration of the terminal with the tenth radio configuration.

If the first reference configuration includes a twelfth radio configuration, and the radio configuration of the source cell includes a radio configuration other than the twelfth radio configuration, the twelfth radio configuration is created for the terminal.

The second reference configuration includes at least the tenth radio configuration and the twelfth radio configuration. Optionally, the second reference configuration further includes another radio configuration other than the eleventh radio configuration in a current radio configuration of the terminal.

In this embodiment of this application, the foregoing process of determining the second reference configuration based on the first reference configuration may be understood as: The terminal applies the first reference configuration in the radio configuration of the source cell. For example, for radio configurations that has a same identifier in the source cell and the first reference configuration, the corresponding radio configuration in the current configuration is replaced with the radio configuration in the first reference configuration. When the radio configuration in the first reference configuration exists but the radio configuration of the source cell does not exist, a corresponding configuration is created for the terminal based on the radio configuration in the first reference configuration. A difference lies in that, for a case in which a radio configuration exists in the source cell of the terminal but the radio configuration does not exist in the first reference configuration, a release operation is not performed first. When the delta configuration of the target cell is completed, a release operation is finally performed for a radio configuration that is in the radio configuration of the source cell and that does not exist in either the first reference configuration or the delta configuration of the target cell.

In this embodiment of this application, the terminal may maintain a second variable, where the second variable is for determining a radio configuration that is to be released by the terminal in the handover process and that is included in the source cell but not in the target cell. Before the terminal applies the first reference configuration, the second variable includes an identifier of the radio configuration of the source cell. When the first reference configuration includes the tenth radio configuration, the radio configuration of the source cell includes the eleventh radio configuration, and the identifier of the tenth radio configuration is the same as the identifier of the eleventh radio configuration, the method further includes: The terminal deletes the identifier of the eleventh radio configuration from the radio configuration identifier that is of the source cell and that is included in the second variable.

Through the foregoing processing, after the terminal applies the first reference configuration, a current configuration of the terminal may be referred to as the second reference configuration. In an implementation, that the terminal determines the radio configuration of the terminal in the target cell based on the second reference configuration and the delta configuration of the target cell includes at least one of the following:
if the second reference configuration of the terminal includes a thirteenth radio configuration, the first reference configuration includes a fourteenth radio configuration, a third list includes a fifteenth radio configuration, the third list is a list in the delta configuration of the target cell, and the thirteenth radio configuration, the fourteenth radio configuration, and the fifteenth radio configuration have a same identifier, reconfiguring the thirteenth radio configuration of the terminal based on the fifteenth radio configuration;
if the third list includes a sixteenth radio configuration, and the second reference configuration and the first reference configuration include a configuration other than the sixteenth radio configuration, creating the sixteenth radio configuration;
if the third list includes a seventeenth radio configuration, the first reference configuration includes a configuration other than the seventeenth radio configuration, the second reference configuration includes an eighteenth radio configuration, and an identifier of the seventeenth radio configuration is the same as an identifier of the eighteenth radio configuration, updating the eighteenth radio configuration based on the seventeenth radio configuration, where optionally, updating the eighteenth radio configuration based on the seventeenth radio configuration may also be understood as replacing the eighteenth radio configuration with the seventeenth radio configuration; or
if a fourth list includes a nineteenth radio configuration, the fourth list is a list in the delta configuration of the target cell, the second reference configuration includes a twentieth radio configuration, and an identifier of the nineteenth radio configuration is the same as an identifier of the twentieth radio configuration, releasing the twentieth radio configuration in the radio configuration of the terminal.

Optionally, the delta configuration of the target cell includes a third list and/or a fourth list. In an example, the third list is a radio configuration addition/modification list, and the fourth list is a radio configuration release list. The second reference configuration of the terminal is a radio configuration of the terminal after the terminal applies the foregoing first reference configuration. If the radio configuration addition/modification list included in the delta configuration of the target cell includes the fifteenth radio configuration, if the current configuration of the terminal (the current configuration of the terminal is a configuration after the terminal applies the first reference configuration, that is, the foregoing second reference configuration) includes the thirteenth radio configuration whose identifier is the same as that of the fifteenth radio configuration, and the first reference configuration includes the fourteenth radio configuration whose identifier is the same as that of the fifteenth radio configuration, the thirteenth radio configuration of the terminal is reconfigured based on the tenth radio configuration. Alternatively, if the radio configuration addition/modification list of the target cell includes the sixteenth radio configuration, and neither the current configuration of the terminal nor the first reference configuration includes a configuration that has a same identifier as the sixteenth radio configuration, the terminal creates the sixteenth radio configuration. Alternatively, if the radio configuration addition/modification list of the target cell includes the seventeenth radio configuration, the first reference configuration does not include a radio configuration whose identifier is the same as that of the seventeenth radio configuration, and the current configuration of the terminal includes the eighteenth radio configuration whose identifier is the same as that of the seventeenth radio configuration, the eighteenth radio configuration in the current configuration of the terminal is replaced with the seventeenth radio configuration. Alternatively, if the radio configuration release list of the target cell includes the nineteenth radio configuration, and the current configuration of the terminal includes the twentieth radio configuration whose identifier is the same as the identifier of the nineteenth radio configuration, the twentieth radio configuration is released in the current configuration of the terminal.

Optionally, when the terminal applies the delta configuration of the target cell, when the third list includes the seventeenth radio configuration, the third list is the list in the delta configuration of the target cell, the first reference configuration includes the configuration other than the seventeenth radio configuration, the second reference configuration includes the eighteenth radio configuration, and the identifier of the seventeenth radio configuration is the same as the identifier of the eighteenth radio configuration, the method further includes: The terminal deletes the identifier of the seventeenth radio configuration from the radio configuration identifier that is of the source cell and that is included in the second variable.

Further, that the terminal applies the delta configuration of the target cell further includes: The terminal releases a radio configuration corresponding to the radio configuration identifier included in the second variable. For example, the radio configuration of the source cell includes a radio configuration 1, a radio configuration 2, and a radio configuration 3. Therefore, before the first reference configuration is applied or in a process of applying the first reference configuration, the second variable may be set to include an identifier (for example, 1) of the radio configuration 1, an identifier (for example, 2) of the radio configuration 2, and an identifier (for example, 3) of the radio configuration 3. In a process of applying the first reference configuration and the delta configuration of the target cell, if a radio configuration in the source cell is updated, replaced, or reconfigured, an identifier of the updated, replaced, or reconfigured radio configuration is deleted from the second variable. For example, if the foregoing update, replacement, or reconfiguration process is performed on the radio configuration 1 of the source cell, the identifier (1) of the radio configuration 1 is deleted from the second variable, and identifier variables of the radio configurations included in the second variable are: the identifier (for example, 2) of the radio configuration 2 and the identifier (for example, 3) of the radio configuration 3. Then, in the radio configuration of the terminal, the terminal may release the radio configuration 2 and the radio configuration 3. For example, the radio configuration is an RLC bearer configuration. If the radio configuration 1 is an RLC bearer configuration whose LCID value is 1, an identifier of the radio configuration 1 is an LCID whose value is 1. If the radio configuration 2 is an RLC bearer configuration whose LCID value is 2, an identifier of the radio configuration 2 is an LCID whose value is 2. If the radio configuration 3 is an RLC bearer configuration whose LCID value is 3, an identifier of the radio configuration 3 is the LCID whose value is 3. In another example, the radio configuration is a DRB configuration. If the radio configuration 1 is a DRB configuration whose DRB identifier is 1, an identifier of the radio configuration 1 is DRB1 whose value is 1. If the radio configuration 2 is a DRB configuration whose DRB identifier is 2, an identifier of the radio configuration 2 is DRB2 whose value is 2. If the radio configuration 3 is a DRB configuration whose DRB identifier is 3, an identifier of the radio configuration 3 is DRB3.

For example, the radio configuration includes an RLC bearer configuration and/or a DRB configuration. Embodiment 2 provides a solution. A main idea of the solution is that the terminal first applies the first reference configuration, and then applies the delta configuration of the target cell based on the first reference configuration. For processing of an RLC bearer, a fourth variable is introduced, and the fourth variable stores an RLC bearer that needs to be released in the radio configuration of the source cell in an LTM handover process. For processing of a DRB, a fifth variable is introduced, and the fifth variable stores a DRB bearer that needs to be released in the radio configuration of the source cell in an LTM handover process. The fourth variable or the fifth variable is a specific implementation of the second variable described above. This solution includes the following steps.

1: The terminal receives an RRC reconfiguration message from the access network device, where the RRC reconfiguration message includes configuration information of an LTM candidate cell.

This is the same as the process in Embodiment 1. The RRC reconfiguration message includes an LTM candidate cell configuration, and optionally further includes the first reference configuration. The LTM candidate cell configuration includes configuration information of one or more LTM candidate cells. For detailed process descriptions, refer to the descriptions of 1 in Embodiment 1.

2: The terminal receives an LTM handover command from the access network device, where the LTM handover command includes information about the target cell.

It should be understood that the target cell in the LTM handover command may be one of LTM candidate cells configured by the access network device for the terminal.

3: The terminal performs LTM handover.

The terminal hands over from the source cell to the target cell based on the information about the target cell included in the LTM handover command.

Optionally, if a configuration of the LTM candidate cell is a delta configuration relative to the first reference configuration. For example, the configuration of the LTM candidate cell may be referred to as a delta configuration of the LTM candidate cell. For example, a configuration of the target cell for handover may be referred to as the delta configuration of the target cell.

Optionally, the terminal obtains the first reference configuration and the delta configuration of the LTM candidate cell from a third variable. Further, the delta configuration of the target cell is obtained from the delta configuration of the LTM candidate cell.

When the terminal receives the LTM handover command of the access network device, the terminal may first apply the first reference configuration, and then apply the delta configuration of the target cell.

For example, the terminal may not release an entity related to the radio configuration when applying the first reference configuration, and the terminal may apply the first reference configuration based on a radio configuration of the current configuration. For example, the first reference configuration includes a radio configuration addition/modification list. For an identifier of a radio configuration included in the radio configuration addition/modification list, if the identifier of the radio configuration is also included in the current configuration of the terminal, configuration information of the radio configuration in the current configuration of the terminal is replaced with configuration information of the radio configuration in the radio configuration addition/modification list. Alternatively, if an identifier of a radio configuration included in the radio configuration addition/modification list is not included in the current configuration of the terminal, the terminal creates the radio configuration or creates an entity related to the radio configuration and configures a parameter related to the radio configuration. When applying the first reference configuration or before applying the first reference configuration, the terminal releases a configuration other than the radio configuration in the reference configuration. Optionally, the terminal applies a default configuration, and then applies the first reference configuration. Through the foregoing processing, after the first reference configuration is applied, a current configuration of the terminal may be referred to as the second reference configuration. The delta configuration of the target cell is applied based on the second reference configuration. Optionally, the delta configuration of the target cell may include a radio configuration addition/modification list and/or a radio configuration release list. The terminal replaces and/or creates the second reference configuration based on the radio configuration addition/modification list. The terminal releases a corresponding radio configuration in the second reference configuration based on the radio configuration release list, or the like. Optionally, a variable may be set, where the variable may be a fourth variable or a fifth variable, and the fourth variable or the fifth variable is for determining a radio configuration that the terminal needs to release in the handover process and that is included in the source cell but not in the target cell. An initial value of the fourth or fifth variable includes an identifier of the radio configuration of the source cell. In other words, before the terminal applies the radio configuration in the first reference configuration, the fourth or fifth variable includes the identifier of the radio configuration of the source cell.

In this embodiment of this application, there are many similar processes in processes in which the terminal applies the first reference configuration and the delta configuration of the target cell. In this embodiment of this application, the processes in which the terminal applies the first reference configuration and the delta configuration of the target cell are described together.

(1) If the first reference configuration or the delta configuration of the target cell includes a cell group configuration, the terminal performs a cell group configuration process.

Optionally, that the terminal performs the cell group configuration process may be understood as that the terminal applies the cell group configuration in the first reference configuration or the delta configuration of the target cell. A specific process includes:
If the terminal performs the process of applying the first reference configuration, the terminal releases a current cell group configuration of the terminal in a cell group configuration except at least one of an MCG C-RNTI or an RLC bearer configuration. Optionally, if the terminal performs the process of applying the first reference configuration, the terminal sets the fourth variable, where the fourth variable includes an LCID list of a cell group RLC bearer in current configuration of the terminal, and the list includes one or more LCIDs. It should be understood that the current configuration of the terminal herein refers to a configuration of the terminal in the source cell, a configuration before the terminal applies the first reference configuration, or a configuration when the terminal applies the first reference configuration.

Optionally, if the terminal applies the delta configuration of the LTM target cell or the terminal does not perform an LTM process, if the cell group configuration includes a synchronous reconfiguration, the terminal performs a synchronous reconfiguration process. Optionally, for the synchronization reconfiguration process, refer to descriptions in the protocol.

If the cell group configuration includes an RLC bearer addition/modification list, an RLC bearer addition/modification process is performed. The RLC bearer addition/modification list includes configuration information of one or more RLC bearers. Configuration information of each RLC bearer includes at least an LCID of the RLC bearer. A value of the LCID may be any positive integer in 1 to 65855. Optionally, the RLC bearer configuration may further include but is not limited to at least one of the following: a serving radio bearer, an RLC re-establishment indication, an RLC configuration, a MAC logical channel configuration, and the like.

In an implementation, an RLC bearer addition/modification process includes: For configuration information of each RLC bearer in the RLC bearer addition/modification list:

Optionally, if the current configuration of the terminal includes an LCID value associated with an RLC bearer, the LCID value is included in the RLC bearer addition/modification list, and an RLC bearer associated with the LCID in the current configuration of the terminal and an RLC bearer associated with the LCID in the RLC bearer addition/modification list belong to a same cell group, if the terminal receives an RLC reestablishment indication from the access network device, the terminal reestablishes an RLC entity.

If the current configuration of the terminal includes an LCID value associated with an RLC bearer, the LCID value is included in the RLC bearer addition/modification list, and optionally, an RLC bearer associated with the LCID in the current configuration of the terminal and an RLC bearer associated with the LCID in the RLC bearer addition/modification list belong to a same cell group: If the terminal is performing a process of applying the first reference configuration, a current terminal configuration of an RLC entity is replaced with an RLC configuration in configuration information of the RLC bearer in the RLC bearer addition/modification list. Optionally, a current terminal configuration of a logical channel is replaced with a configuration in a MAC logical channel configuration in the RLC bearer addition/modification list, and the LCID value is deleted from the fourth variable.

If the current configuration of the terminal includes an LCID value associated with an RLC bearer, the LCID value is included in the RLC bearer addition/modification list, and optionally, an RLC bearer associated with the LCID in the current configuration of the terminal and an RLC bearer associated with the LCID in the RLC bearer addition/modification list belong to a same cell group: If the terminal is performing the process of applying the delta configuration of the target cell, and the first reference configuration does not include configuration information of an RLC bearer with the LCID value, a current terminal configuration of an RLC entity is replaced with an RLC configuration in configuration information of the RLC bearer in the RLC bearer addition/modification list. Optionally, a current terminal configuration of a logical channel is replaced with a configuration in a MAC logical channel configuration in the RLC bearer addition/modification list, and the LCID value is deleted from the fourth variable.

If the terminal does not apply the first reference configuration and the terminal does not apply the delta configuration of the target cell, an RLC entity is reconfigured based on a received RLC configuration, and a logical channel is reconfigured based on a received MAC logical channel. Alternatively, the terminal performs a process of applying the delta configuration of the target cell, and an RLC bearer addition/modification list in the delta configuration of the target cell includes an LCID value, where the LCID value is included in an RLC bearer addition/modification list in the first reference configuration, an RLC entity is reconfigured based on a received RLC configuration, and a logical channel is reconfigured based on a received MAC logical channel.

If the RLC bearer addition/modification list in the first reference configuration or the target cell configuration includes an LCID value, where the LCID value is not included in the current configuration of the terminal, and optionally is not included in a same cell group, an RLC entity is established. Optionally, in an implementation, if the RLC bearer addition/modification list in the first reference configuration or the target cell configuration includes an LCID value, where the LCID value is not included in the current configuration of the terminal, and optionally is not included in a same cell group: If a serving radio configuration bearer is associated with a logical channel of an SRB, and does not include an RLC configuration, the terminal establishes an RLC entity based on a default configuration of the SRB; otherwise, establishes an RLC entity based on a received RLC configuration. If a serving radio bearer associates a logical channel with an SRB, and if a MAC logical channel configuration is not included, the terminal configures a logical channel for the MAC entity based on a default configuration of the SRB; otherwise, the terminal configures a logical channel for the MAC entity based on a received MAC logical channel configuration. The logical channel is associated with a PDCP entity identified by a serving radio bearer or a serving mobile base station (mobile base station, MBS) radio bearer.

In another implementation, an RLC bearer addition/modification process includes but is not limited to at least one of the following: If the RLC bearer addition/modification list includes an LCID value, and the LCID value does not belong to an identifier of an RLC bearer in the current configuration of the terminal, an RLC bearer is created based on an RLC bearer corresponding to the LCID value included in the RLC bearer modification list. Alternatively,
if the current configuration of the terminal includes an RLC bearer that is received in a same cell group and that has an LCID identifier, if the terminal receives an RLC recreation indication from the access network device, the terminal recreates an RLC entity. Alternatively, if the terminal applies the first reference configuration, or if the terminal performs a process of applying the delta configuration of the target cell and a cell group configuration of a same cell group in the first reference configuration does not include any RLC bearer configuration that has a received LCID value in the target cell configuration, that is, the RLC bearer is included in an LTM target cell configuration but not included in the first reference configuration, a current terminal configuration of an RLC entity is replaced with the RLC bearer configuration in the first reference configuration or the delta configuration of the target cell, and a MAC logical channel of a current terminal of a logical channel is replaced with a configuration in a MAC logical channel, and the like; and the logical channel identifier is deleted from the fourth variable. Alternatively,
if the terminal does not apply the first reference configuration of the LTM and does not apply the delta configuration of the LTM target cell, the terminal reconfigures an RLC entity based on a received RLC configuration, and reconfigures a logical channel based on a received MAC logical channel. Alternatively, the terminal performs a process of applying the delta configuration of the target cell, and an RLC bearer addition/modification list in the delta configuration of the target cell includes an LCID value, where the LCID value is included in an RLC bearer addition/modification list in the first reference configuration, an RLC entity is reconfigured based on a received RLC configuration, and a logical channel is reconfigured based on a received MAC logical channel. Alternatively,
if a logical channel associated with a logical channel identifier value in the first reference configuration or the delta configuration of the target cell is not configured in a same cell group of the current configuration of the terminal: If a serving radio configuration bearer is associated with a logical channel of an SRB, and does not include an RLC configuration, the terminal creates an RLC entity based on a default configuration of the SRB; otherwise, the terminal creates an RLC entity based on a received RLC configuration. If a serving radio bearer associates a logical channel with an SRB, and if a MAC logical channel configuration is not included, a logical channel is configured for a MAC entity based on a default configuration of the SRB. Otherwise, a logical channel is configured for the MAC entity based on a received MAC logical channel configuration. The logical channel is associated with a PDCP entity of a radio bearer identifier of a serving radio bearer or a serving MBS.

Optionally, if the cell group configuration includes an RLC bearer release list, an RLC bearer release process is performed. Alternatively,
optionally, if the terminal performs a process of applying the delta configuration of the target cell, the terminal releases an RLC bearer corresponding to an RLC bearer identifier included in the fourth variable. Optionally, the fourth variable is cleared or released.

The RLC bearer addition/modification list indicates an RLC entity that needs to be released by the terminal and a corresponding MAC logical channel. The RLC bearer addition/modification list includes one or more LCIDs.

An RLC bearer release process includes: For each logical channel identifier included in the RLC bearer release list, where the identifier is a part of the current configuration of the terminal in a same cell group, an RLC entity is released and a corresponding logical channel is released; for each logical channel identifier released due to release of a secondary cell group (secondary cell group, SGC), an RLC entity is released and a corresponding logical channel is released; or for each logical channel identifier to be released during processing of the LTM target cell configuration, an RLC entity is released and a corresponding logical channel is released.

If a cell group includes a MAC configuration for a cell group, a MAC entity of the cell group is configured.

(2) If the first reference configuration or the delta configuration of the target cell includes a radio bearer configuration, the terminal performs a radio bearer configuration process.

The radio bearer configuration process includes:
If the terminal performs the process of applying the first reference configuration, the fifth variable is set to a DRB identifier list in the current configuration of the terminal. For example, the fifth variable may be referred to as a DRB release variable. If the radio bearer configuration includes an SRB addition/modification list, or if a dual active protocol stack (dual active protocol stack, DAPS) bearer is configured, the terminal performs SRB addition or reconfiguration. That the terminal performs SRB addition or reconfiguration is that the terminal performs an SRB addition/modification process.

If the radio bearer configuration includes a DRB release list, the terminal performs a DRB release process.

If the radio bearer configuration includes a DRB addition/modification list, the terminal performs a DRB addition or reconfiguration process.

Optionally, the terminal releases all SDAP entities without an associated DRB, and if existence, indicates an upper layer to release a user plane resource of a protocol data unit (protocol data unit, PDU) session associated with the released SDAP entities. Optionally, the terminal releases all SDAP entities without an associated multicast MRB, and indicates the upper layer to release a user plane resource of MRB multicast.

The SRB addition/modification process includes at least the following: For an SRB value that is included in the SRB addition/modification list and that is not part of the current terminal configuration: A PDCP entity is established; if access stratum (access stratum, AS) security is activated, the PDCP entity is configured by using a security algorithm based on a security configuration, and a key associated with a master key or a secondary key indicated by the access network device is applied; and if a PDCP configuration is included, the PDCP entity is configured based on the received PDCP configuration; or if the PDCP configuration is not included, the PDCP entity is configured by default based on a corresponding SRB.

For an SRB value included in the SRB addition/modification list that is a part of the current configuration of the terminal: optionally, if a PDCP is set to be re-established, the PDCP entity is configured to apply an indicated integrity protection algorithm and key that associated with a master key or a secondary key; the PDCP entity is configured to apply the indicated encryption algorithm and key associated with the master key or the secondary key to re-establish a PDCP entity of the SRB; optionally, if a PDCP is set to be discarded, the PDCP entity is triggered to perform service data unit (service data unit, SDU) discarding; optionally, if a PDCP configuration is included, if the terminal applies the first reference configuration, the terminal replaces a current terminal configuration of the PDCP entity with a PDCP configuration related to an SRB identifier in the SRB addition/modification list in the first reference configuration; otherwise, if the terminal applies the delta configuration of the target cell or if the terminal does not perform the LTM process, the terminal reconfigures a PDCP entity based on a received PDCP configuration.

The DRB release process includes at least the following: For each DRB identifier value included in the DRB release list that is a part of a current terminal configuration, for each DRB identifier value released because a full configuration is performed, for a DRB identifier value that needs to be released when the delta configuration of the first target cell is performed or processed, or optionally, for an identifier value of a DRB that needs to be released when the delta configuration of the first target cell is performed or processed is the fifth variable in the foregoing process: The terminal releases a PDCP entity and a DRB identifier; if an SDAP entity associated with the DRB is configured, releases a DRB-to-SDAP association associated with the DRB, that is, deletes all quality of service (quality of service, QoS) flow-to-DRB mappings associated with the DRB; and if the DRB is associated with an evolved packet system (evolved packet system, EPS) bearer identifier, indicates an upper layer to release the DRB and the EPS bearer identifier of the DRB if a new bearer is not added with a same ESP bearer identifier.

The DRB addition/modification process includes: For a DRB identifier value that is included in the DRB addition/modification list and that does not belong to a current terminal configuration, DRB establishment is performed. The DRB establishment includes establishment of a PDCP entity and configuration based on a received PDCP configuration.

The DRB addition/modification process further includes: For an identifier value, included in the DRB addition/modification list, of each DRB that is used as a part of a current terminal and that is not configured as a DAPS bearer, optionally, if a PDCP re-establishment indication is set, and if a PDCP entity of the DRB is not configured with a disable configuration, configuring, for the PDCP entity, an encryption algorithm and a key associated with a master key or a secondary key; if a PDCP re-establishment indication is set, and if the PDCP entity of the DRB is configured with integrity protection, an integrity protection algorithm is configured for the PDCP entity based on a security configuration, and an integrity protection key associated with the master key or the secondary key is applied. Optionally, if the PDCP re-establishment indication is set, and if a PDCP configuration includes DRB robust header compression (robust header compression, ROHC) continuity, an RRC layer of the terminal indicates to a lower layer that the DRB ROHC continuity is configured. Optionally, if a PDCP re-establishment indication is set, and if the PDCP configuration includes a DRB downlink ethernet header compression (ethernet header compression, EHC) continuity, a lower layer is indicated that DRB downlink EHC continuity is configured. Optionally, if a PDCP re-establishment indication is set, and if the PDCP configuration includes DRB UDC continuity, a lower layer is indicated that DRB downlink UDC continuity is configured; or if a PDCP re-establishment indication is set, the terminal re-establishes a PDCP entity of the DRB. Optionally, if PDCP recovery is set, the terminal triggers a PDCP entity of the DRB to perform data recovery. For an identifier value, included in the DRB addition/modification list, of each DRB that is used as a part of the current terminal, if a related PDCP configuration is included, if the terminal applies the first reference configuration, a current terminal configuration of a PDCP entity is replaced with the PDCP configuration associated with the DRB identifier value in the DRB addition/modification list, and the DRB identifier is deleted from the fifth variable. For an identifier value, included in the DRB addition/modification list, of each DRB that is used as a part of the current terminal, if a related PDCP configuration is included, and if the terminal performs a process of the delta configuration of the target cell, and the first reference configuration does not include a PDCP configuration associated with the DRB identifier value in the target cell configuration, which may be understood as that the DRB identifier value and the related PDCP configuration are included in a target configuration, but not included in the first reference configuration, a current terminal configuration of the PDCP entity is replaced with the PDCP configuration associated with the DRB identifier value in the DRB addition/modification list, and the DRB identifier value is deleted from the fifth variable. For an identifier value, included in the DRB addition/modification list, of each DRB that is used as a part of the current terminal, if a related PDCP configuration is included, and if the terminal does not perform an LTM process, a PDCP entity is reconfigured based on a received PDCP configuration. For an identifier value, included in the DRB addition/modification list, of each DRB that is used as a part of the current terminal, if a related PDCP configuration is included, and if the terminal applies the delta configuration of the LTM target cell, and the first reference configuration does not include a PDCP associated with the DRB identifier value in the delta configuration of the target cell, a PDCP entity is reconfigured based on a received PDCP configuration in the delta configuration of the target cell. Optionally, if an SDAP configuration is included, an SDAP entity is reconfigured based on the received SDAP configuration. Optionally, for each QFI value added to a mapping QoS flow addition field, if a QoS flow identifier (QoS flow identifier, QFI) value has been configured previously, the QFI value is released in an old DRB.

(3) If the terminal performs a process of applying the delta configuration of the LTM target cell, the terminal releases a DRB identifier value included in the fifth variable, and releases a corresponding PDCP entity.

(4) Optionally, if the first reference configuration or the target cell configuration includes the measurement configuration, the terminal performs the measurement configuration process. For details about the measurement configuration process, refer to the protocol.

Optionally, if the terminal applies the first reference configuration, and the first reference configuration includes the measurement configuration, that the terminal performs the measurement configuration further includes: releasing/clearing a current terminal measurement configuration of a related cell group, including at least one of releasing a measurement configuration report, releasing a measurement configuration variable, stopping any running periodic reporting, stopping a timer T321, or stopping a timer T322. Optionally, that the terminal performs the measurement configuration may further include: if the measurement configuration of the first reference configuration includes a measurement object addition/modification list, performing measurement object addition/modification; if the measurement configuration includes a measurement object deletion list, performing measurement object deletion; if the measurement configuration includes a measurement report configuration addition/modification list, performing measurement report configuration addition/modification; if the measurement configuration includes a measurement report configuration deletion list, performing measurement report configuration deletion; if the measurement configuration includes a measurement quantity configuration, performing a measurement quantity configuration process; if the measurement configuration includes a measurement identifier addition/modification list, performing measurement identifier addition/modification; or if the measurement configuration includes a measurement identifier deletion list, performing measurement identifier deletion.

In Embodiment 2, a new handover target cell application process is introduced for an LTM process. In a process in which the terminal performs the LTM cell handover, the terminal applies the first reference configuration, and then applies the delta configuration of the target cell, to ensure that the terminal can accurately apply the target cell configuration, and perform a process of handover to the target cell, thereby ensuring a handover success rate. Further, when the LTM target cell configuration is applied, for a configuration (for example, an RLC bearer, a radio bearer, and an SCell configuration) affecting service continuity, a new processing process is introduced. The configuration of the source cell and the configuration of the target cell are compared, so that the terminal does not perform an unnecessary "release and then add" process for a configuration that affects service continuity and that is included in both the source cell and the target cell in a handover process. For example, when the terminal applies the target configuration based on the first reference configuration, this avoids unnecessary release and addition of an RLC bearer or a radio bearer that is included in both the current configuration of the terminal and the target configuration in an LTM execution process, thereby improving LTM handover performance, and reducing a handover interruption and a handover delay.

### [Embodiment 3]

A difference between Embodiment 3 and Embodiment 1 lies in that: In Embodiment 1, the terminal first applies the first reference configuration, and then applies the delta configuration of the target cell. In Embodiment 3, the terminal generates the configuration of the target cell based on the first reference configuration and the delta configuration of the target cell. The terminal applies the configuration of the target cell. For example, the terminal generates the configuration of the target cell based on the first reference configuration and the delta configuration of the target cell. Optionally, the configuration of the target cell may be a complete configuration of the target cell in Embodiment 3. The terminal replaces the current radio configuration of the terminal with a radio configuration in the configuration of the target cell.

For example, that the terminal generates the configuration of the target cell includes: if a sixth variable includes the first reference configuration, reconfiguring the sixth variable based on the delta configuration of the target cell, where a reconfigured sixth variable is the generated configuration of the target cell; or if the sixth variable is empty, reconfiguring the sixth variable based on the first reference configuration to obtain a seventh variable; and reconfiguring the seventh variable based on the delta configuration of the target cell, where a reconfigured seventh variable is a generated configuration of the target cell.

It may be understood that, if a measurement configuration in the configuration of the target cell is the same as a measurement configuration in a current terminal configuration, the terminal retains a current measurement result.

In a design, that the terminal applies the complete configuration of the target cell includes: The terminal releases current configuration information of the terminal except at least one of an MCG C-RNTI, an access stratum security configuration, an RB configuration, an RLC bearer configuration, an SCell configuration, or a logged measurement configuration. The terminal maintains a first variable, where the first variable includes the first reference configuration; updates the first variable based on the delta configuration of the target cell, where an updated first variable includes a complete radio configuration of the target cell; and determines the radio configuration of the terminal in the target cell based on the updated first variable.

In another design, that the terminal applies the complete target cell configuration includes but is not limited to at least one of the following processes: The terminal releases current configuration information of the terminal except at least one of an MCG C-RNTI, an access stratum security configuration, an RB configuration, an RLC bearer configuration, an SCell configuration, or a logged measurement configuration; the terminal applies a default L1 parameter value except a parameter provided in a SIB1; and the terminal applies a default MAC configuration for a cell group. Alternatively, if the target cell configuration includes a master cell group configuration, a cell group configuration process is performed; if the first reference configuration includes a secondary cell group configuration, a cell group configuration process is performed; if a measurement configuration is included, a measurement configuration process is performed; if a dedicated NAS message list is included, each information element in the list is forwarded to an upper layer; or if dedicated system information is included, a behavior of receiving system information is performed. The terminal does not need to maintain the first variable. The terminal compares the radio configuration in the complete configuration of the target cell with the radio configuration of the terminal in the source cell, that is, the terminal compares the radio configuration in the complete configuration of the target cell with the radio configuration in the current configuration of the terminal, to determine the radio configuration of the terminal in the target cell. Alternatively, the terminal maintains the first variable, and the terminal compares the radio configuration in the complete configuration of the target cell with the radio configuration in the current configuration of the terminal, to determine the radio configuration of the terminal in the target cell. In other words, the terminal replaces the current radio configuration of the terminal with the radio configuration of the target cell, thereby avoiding unnecessary release and addition.

The radio configuration of the terminal may include at least one of an RLC bearer configuration, a DRB bearer configuration, an SRB bearer configuration, or an SCell configuration.

An example in which the radio configuration of the terminal is an RLC bearer configuration is used. An embodiment of this application provides a solution, including the following steps.

1: The terminal receives an RRC reconfiguration message from the access network device, where the RRC reconfiguration message includes configuration information of an LTM candidate cell.

2: The terminal receives an LTM handover command from the access network device, where the LTM handover command includes information about the target cell.

3: The terminal performs LTM handover from the source cell to the target cell.

That the terminal applies the complete target cell configuration includes but is not limited to at least one of the following processes: The terminal releases current configuration information of the terminal except at least one of an MCG C-RNTI, an access stratum security configuration, an RB configuration, an RLC bearer configuration, an SCell configuration, or a logged measurement configuration; the terminal applies a default L1 parameter value except a parameter provided in a SIB1; and the terminal applies a default MAC configuration for a cell group. Alternatively, if the target cell configuration includes a master cell group configuration, a cell group configuration process is performed; if the first reference configuration includes a secondary cell group configuration, a cell group configuration process is performed; if a measurement configuration is included, a measurement configuration process is performed; if a dedicated NAS message list is included, each information element in the list is forwarded to an upper layer; or if dedicated system information is included, a behavior of receiving system information is performed.

In an implementation process, a process of determining a radio configuration in the cell group configuration process is the same as the first variable in Embodiment 1. For a specific implementation, refer to Embodiment 1.

In another implementation process, the cell group configuration process may include: If the LTM process is running, the terminal performs an RLC bearer processing process. This process is the same as the RLC processing principle in Embodiment 1, but implementations of the terminal are different. For an LCID of an RLC bearer configuration of the target cell, if an RLC bearer configuration of the source cell includes an RLC bearer with the same LCID, and the two RLC bearers belong to a same cell group, the RLC bearer with the same LCID is reconfigured in the current configuration of the terminal by using an RLC bearer of the target cell. In an understanding, that the RLC bearer with the same LCID is reconfigured in the current configuration of the terminal by using the RLC bearer of the target cell means replacing a current RLC bearer configuration of the terminal with the RLC bearer configuration of the target cell. For an LCID of an RCL bearer configuration of the target cell, if an RLC bearer with the same LCID does not exist in an RLC bearer of the source cell, the RLC bearer corresponding to the LCID is created in the current configuration of the terminal. For an LCID of an RLC bearer of the source cell, if an RLC bearer corresponding to the LCID does not exist in the RLC bearer of the target cell, the RLC bearer corresponding to the LCID is released in the current configuration of the terminal. If the LTM process is not running: if the cell group configuration includes an RLC bearer release list, the RLC bearer release process is performed. If the cell group configuration includes an RLC bearer addition/modification list, an RLC bearer addition/modification process is performed. If a cell group configuration includes a MAC configuration for a cell group, a MAC entity of the cell group is configured.

4: The terminal performs a RACH or RACH-less process on the target cell.

In Embodiment 3, in the process of performing the LTM cell handover by the terminal, the terminal generates the complete target cell configuration based on the first reference configuration and the delta configuration of the target cell, and then the terminal applies the complete configuration process of the target cell, so that the terminal can accurately apply the target cell configuration to perform a handover to the target cell, thereby improving a handover success rate. When the LTM target cell configuration is applied, for a configuration parameter (for example, an RLC bearer) affecting service continuity, the configuration of the source cell and the configuration of the target cell are compared, so that the terminal does not perform an unnecessary "release and then addition" process for a configuration that affects service continuity and that is included in both the source cell and the target cell in a handover process. For example, when the terminal applies the target configuration based on the first reference configuration, this avoids unnecessary release and addition of an RLC bearer or a radio bearer that is included in both the current configuration of the terminal and the target configuration in an LTM execution process, thereby improving LTM handover performance, and reducing a handover interruption and a handover delay.

### [Embodiment 4]

A main idea of Embodiment 4 is as follows: When the terminal receives an LTM handover command, the terminal determines a complete configuration of the target cell based on the first reference configuration and the delta configuration of the target cell, and the terminal applies the complete configuration of the target cell.

In an implementation, that the terminal applies the complete configuration of the target cell includes: The terminal applies a complete radio configuration of the target cell. That the terminal applies the complete radio configuration of the target cell includes: The terminal determines a radio configuration addition/modification list and/or a radio configuration release list based on the radio configuration of the target cell and the radio configuration of the source cell, where the radio configuration addition/modification list and/or the radio configuration release list are/is a delta configuration based on the source cell; and applies the radio configuration of the target cell based on the radio configuration addition/modification list and/or the radio configuration release list.

An example in which the radio configuration of the terminal is an RLC bearer is used. An embodiment of this application provides a solution, including the following steps.

1: The terminal receives an RRC reconfiguration message from the access network device, where the RRC reconfiguration message includes configuration information of an LTM candidate cell.

2: The terminal receives an LTM handover command from the access network device, where the LTM handover command includes information about the target cell.

3: The terminal performs LTM handover from the source cell to the target cell.

The terminal generates the complete configuration of the target cell based on the first reference configuration and the delta configuration of the target cell. The terminal generates a new delta configuration of the target cell by comparing the configuration of the source cell with the configuration of the target cell. The new delta configuration of the target cell is a delta configuration based on the configuration of the source cell. The new delta configuration of the target cell includes a new RLC bearer addition/modification list and/or a new RLC bearer release list. The new RLC bearer addition/modification list and/or the new RLC bearer release list are/is a delta configuration based on an RLC bearer configuration of the source cell of the terminal.

4: The terminal applies the complete target cell configuration, which includes but is not limited to the following process:
The terminal releases current configuration information of the terminal except at least one of an MCG C-RNTI, an access stratum security configuration, an RB configuration, an RLC bearer configuration, an SCell configuration, or a logged measurement configuration. The terminal applies a default L1 parameter value, except a parameter provided in the SIB1. The terminal applies a default MAC configuration for a cell group.

If the complete radio configuration of the target cell includes a master cell group configuration, the cell group configuration process is performed, including: If the LTM process is running, for each RLC bearer included in the RLC bearer addition/modification list, if the current configuration of the terminal includes RLC bearers that belong to a same cell group and have a same LCID value, an RLC entity is reconfigured; otherwise, an RLC entity is created. For each RLC bearer included in the RLC bearer release list, if an LCID of the RLC bearer is a part of the current terminal configuration, an RLC entity associated with the LCID is released, and a corresponding logical channel is released.

If the cell group configuration includes a MAC configuration for a cell group, a MAC entity of the cell group is configured. If the complete configuration of the target cell includes a secondary cell group configuration, a cell group configuration process is performed. If a measurement configuration is included, a measurement configuration process is performed. If a dedicated NAS message list is included, each information element in the list is forwarded to an upper layer. If dedicated system information is included, a behavior of receiving system information is performed.

5: The terminal performs a RACH or RACH-less process on the target cell, to keep synchronization with the target cell.

According to the foregoing Embodiment 4, in the process of performing the LTM cell handover, the terminal can accurately apply the target cell configuration, and perform a process of handover to the target cell, thereby improving a handover success rate. When the configuration of the target cell is applied, for a configuration parameter (for example, an RLC bearer) that affects service continuity, the terminal generates a new delta configuration based on the configuration of the source cell, to avoid an unnecessary "release and add" process of the terminal, thereby improving LTM handover performance and reducing a handover interruption and a handover delay.

### [Embodiment 5]

Embodiment 5 provides a handover procedure, including the following steps.

1: The terminal reports a measurement report based on a measurement configuration. The measurement configuration and report may be an L3 measurement configuration and report, and may be configured by a CU.

2: The CU makes a handover decision, and determines to perform L1/L2 handover.

Optionally, the access network device may make the handover decision based on a measurement result reported by the terminal and/or a handover algorithm of the access network device. The CU sends a terminal context setup request message to one or more candidate DUs.

Optionally, the CU sends one or more reference configurations to the candidate DU. The reference configuration is used by the candidate DU to determine a delta configuration that is based on a reference configuration and that is of one or more candidate cells, or the reference configuration is used by the candidate DU to determine a configuration of one or more LTM candidate cells. For example, the CU sends a plurality of reference configurations to the candidate DU, which are referred to as a third reference configuration herein. The third reference configuration is a general term of reference configurations sent by the CU to the candidate DU, and the third reference configuration is not specifically one reference configuration. Optionally, it may be understood that when the CU sends a plurality of reference configurations to the candidate DU, the plurality of reference configurations may be different configurations, that is, the plurality of third reference configurations may be understood as a plurality of third reference configurations including different configuration content.

The reference configuration may be empty or non-empty. If the reference configuration is non-empty, the reference configuration includes a first radio resource configuration. Optionally, the first radio resource configuration includes a radio configuration in another embodiment. For the radio configuration, refer to the foregoing descriptions. The first radio resource configuration is one or more information elements in a second radio resource configuration included in a candidate cell configuration. For example, if as specified, the second radio resource configuration included in the candidate cell configuration may include a cell group configuration, a radio bearer configuration, and a measurement configuration, the first radio resource configuration may include the cell group configuration, the radio bearer configuration, and/or the measurement configuration. Each configuration in the radio resource configuration may be referred to as an information element, that is, the radio resource configuration includes one or more information elements. For example, the cell group configuration is an information element, and the radio bearer configuration is also an information element in the radio resource configuration. An information element that is not included in the second radio resource configuration is not included in the reference configuration.

1: The candidate DU performs admission control. If the candidate DU determines that access of the terminal is allowed, the candidate DU sends a terminal context setup request acknowledgment message to the CU, where the terminal context setup request acknowledgment message may include configuration information of an LTM candidate cell.

Each candidate DU and/or the CU determines, based on the reference configuration, a delta configuration that is of each candidate cell of the candidate DU and that is based on the reference configuration. Alternatively, if a candidate DU and/or the CU cannot understand, decode, or identify the reference configuration, the candidate DU and/or the CU provides, for a candidate cell under the candidate DU, a complete configuration for the candidate cell. The complete configuration of the candidate cell may also refer to the candidate cell configuration in step 2. In an understanding, the complete configuration of the candidate cell includes a complete second radio resource configuration. Alternatively, in another understanding, the complete configuration of the candidate cell may also be a complete second radio resource configuration obtained based on the reference configuration and the delta configuration. Alternatively, the complete configuration of the candidate cell includes the second radio resource configuration and a third radio resource configuration. Alternatively, in another understanding, the complete configuration of the candidate cell includes a complete RRC reconfiguration information element. Optionally, if the configuration of the candidate cell is a complete configuration, when the LTM is performed, the terminal performs a replacement operation, and optionally, the terminal does not need to clear the current configuration. For example, an RLC configuration and/or a PDCP configuration in the complete configuration of the candidate cell are/is for replacing an RLC configuration and/or a PDCP configuration that are/is in the current terminal configuration and that have/has a same identifier. For example, if a logical channel identifier of an RLC bearer in the complete configuration of the candidate cell is the same as a logical channel identifier associated with an RLC bearer in the current terminal configuration, when the LTM is performed, the RLC configuration that has the same logical channel identifier in the current terminal configuration is replaced with the RLC configuration in the complete configuration of the candidate cell associated with the logical channel identifier. For another example, if an RB identifier in the complete configuration of the candidate cell is the same as an RB identifier in the current terminal configuration, when the LTM is performed, a configuration (for example, a PDCP configuration) associated with the RB identifier in the complete configuration of the candidate cell is for replacing a configuration (for example, a PDCP configuration) that is in the current terminal configuration and that has a same RB identifier. A network (that is, the candidate DU and/or the CU) may configure all candidate cells with delta configurations based on a non-empty reference configuration, or may configure all candidate cells with complete configurations. Alternatively, the network may configure a candidate cell with a full configuration including a fullconfig indication (the fullconfig indication is also referred to as a full configuration indication, or may be denoted as fullConfig, and for descriptions thereof, refer to a standard protocol), or a hybrid configuration (to be specific, a hybrid configuration of two or three of the candidate cell configuration being the delta configuration, the candidate cell configuration being the complete configuration, and the candidate cell configuration being the full configuration including the fullconfig indication).

Optionally, to enable the terminal to know whether each candidate cell configuration is a delta configuration, a complete configuration, or a full configuration including a fullconfig indication, when configuring an LTM candidate cell for the terminal, the network may include indication information to indicate which one of the three configurations is a configuration of each LTM candidate cell. This operation has the following beneficial effects: The terminal can accurately determine a configuration (a delta configuration, a complete configuration, or a full configuration) of each candidate cell, so that a complete candidate cell configuration can be accurately determined or generated for each candidate cell, and the candidate cell configuration can be correctly applied, thereby ensuring a successful handover.

The access network device may indicate a configuration of each LTM candidate cell based on at least one of the following indication information.
- Manner 1: The indication information may be a preset bit to indicate whether the candidate cell configuration is a delta configuration or a complete configuration. For example, for 1-bit indication information: When a value of the 1-bit indication information is 1, it indicates that the LTM candidate cell configuration is a delta configuration based on the reference configuration; and when the value of the 1-bit indication information is 0, it may indicate that the LTM candidate cell configuration is a complete configuration. Alternatively, when a value of the 1-bit indication information is 0, it indicates that the LTM candidate cell configuration is a delta configuration based on the reference configuration; and when the value of the 1-bit indication information is 1, it may indicate that the LTM candidate cell configuration is a complete configuration. Alternatively, when a value of the 1-bit indication information is true, it indicates that the LTM candidate cell configuration is a delta configuration based on the reference configuration; or when a value of the 1-bit indication information is true, it indicates that the LTM candidate cell configuration is a complete configuration.
- Manner 2: New indication information indicates whether the candidate cell configuration is a complete configuration or is not a complete configuration. In this way, for each LTM candidate cell configuration, the terminal determines, based on indication information in the LTM candidate cell, whether the LTM candidate cell configuration is a full configuration including a fullconfig indication or a complete configuration, or if the candidate cell configuration does not include a fullconfig indication or a complete configuration indication, the terminal considers that the candidate cell configuration is the delta configuration based on the reference configuration. It should be understood that, for the fullconfig indication, refer to an existing 3GPP protocol.
- Manner 3: The reference configuration is mandatory. If all candidate cell configurations are complete configurations, the network configures an empty reference configuration. If the candidate cell configuration is a hybrid configuration described above, the network may configure a plurality of reference configurations. When configuring an LTM candidate cell for the terminal, the network indicates an identifier of a reference configuration of the candidate cell for each LTM candidate cell. The identifier of the reference configuration indicates, to the terminal, whether the configuration is based on the delta configuration or the complete configuration (if the reference configuration is empty, and if a delta configuration of any candidate cell is based on the delta configuration of the empty reference configuration, it may be understood as that the candidate cell is a complete configuration), and/or a delta configuration that is of a specific reference configuration and on which the candidate cell is based.

If the candidate cell is a delta configuration based on the reference configuration, any information element in the second radio configuration needs to be included in a delta configuration of each candidate cell if the information element is not included in the reference configuration. Such an operation has the following beneficial effects: a case in which the candidate cell cannot use the information element or the information element has no available configuration parameter is avoided, and a case in which a service or data cannot be transmitted is avoided.

2: The CU sends an RRC reconfiguration message to the terminal, where the RRC reconfiguration message includes LTM pre-configuration information, and the LTM pre-configuration information includes one or more LTM candidate cell configurations. Optionally, the RRC reconfiguration message sent by the CU to the terminal further includes L1 measurement configuration information.

In an implementation, the LTM pre-configuration information provided by the CU for the terminal further includes the reference configuration of the LTM candidate cell. In an optional implementation, if a plurality of reference configurations are configured for the network, for a configuration of each LTM candidate cell, an index (index) or an identifier of a reference configuration of each candidate cell needs to be indicated. Optionally, the index or the identifier of the reference configuration is included in each LTM candidate cell configuration. The terminal determines, based on the configuration information of each candidate cell and/or the index or identifier of the corresponding reference configuration, a complete configuration and/or a reference configuration used for each candidate cell. In this way, the terminal can accurately determine a reference configuration on which the delta configuration of each candidate cell is based, so that a complete candidate cell configuration can be accurately determined or generated for each candidate cell, and the candidate cell configuration can be correctly applied, thereby ensuring a successful handover.

In another optional implementation, if the current terminal configuration is used as the reference configuration, the network indicates information elements that are stored as the reference configuration to the terminal. For example, the first radio resource configuration is indicated as a reference configuration. For example, the first radio resource configuration includes a cell group configuration, a measurement configuration, and/or a radio bearer configuration.

In an implementation, the reference configuration described in step 2 and/or step 3 is a reference configuration between the CU and the DU.

A reference configuration of an air interface is the reference configuration configured by the network for the terminal in the RRC reconfiguration message. In an implementation, the reference configuration of the air interface may be the reference configuration in steps 2 and 3, that is, the first radio resource configuration is included. Optionally, in this implementation, the reference configuration between the CU and the DU is the same as the reference configuration of the air interface. In an understanding, the complete configuration of the candidate cell includes a complete second radio resource configuration. In another understanding, the complete configuration of the candidate cell may also be a complete second radio resource configuration obtained based on the reference configuration and the delta configuration.

In another implementation, the reference configuration of the air interface includes the first radio resource configuration and the third radio resource configuration, and the third radio resource configuration is a configuration or a current terminal configuration other than the second radio resource configuration. In this case, the complete configuration of the candidate cell includes a complete second radio configuration and a complete third radio configuration. For example, the reference configuration described in step 3 and or step 4 includes the first radio resource configuration and the third radio resource configuration.

In an optional implementation, the reference configuration between the CU and the DU includes the first radio resource configuration, and the reference configuration of the air interface includes the first radio resource configuration and the third radio resource configuration. Optionally, in this implementation, the reference configuration between the CU and the DU is different from the reference configuration of the air interface. The terminal determines the complete candidate cell configuration based on the empty reference configuration.

It should be understood that the reference configuration between the CU and the DU may be the same as or different from the reference configuration of the air interface.

Optionally, for the measurement configuration, the measurement configuration of the terminal before and after the LTM handover may remain unchanged. To avoid release or clearing of a measurement result when the terminal applies the configuration of the target cell during LTM execution, whether the measurement configuration of the LTM candidate cell changes may be indicated. Optionally, whether a measurement configuration is changed may be indicated for each candidate cell. An indication manner may be one of the following two solutions:
**▪** Solution 1: The LTM pre-configuration information configured by the network for the terminal includes a measurement configuration resource pool. The measurement configuration resource pool includes one or more measurement configurations, and each measurement configuration is associated with one measurement configuration identifier ID. For each LTM candidate cell configuration, the configuration of the candidate cell includes a measurement configuration identifier ID. The terminal determines the measurement configuration of the candidate cell based on the measurement configuration identifier ID in the candidate cell configuration. If a measurement configuration ID of a target cell (for example, the target cell is one of candidate cells) is the same as a current measurement configuration ID of the terminal, the terminal does not release a measurement result when performing the LTM handover. In another understanding, if measurement configuration IDs of two candidate cells are the same, the terminal retain a measurement result when performing an LTM handover between the two candidate cells.
**▪** Solution 2: Each candidate cell includes indication information indicating whether the measurement configuration is changed. Optionally, the indication information indicates whether the candidate cell changes a measurement configuration of the source cell when the terminal receives the LTM pre-configuration. Optionally, if the terminal is handed over to a cell whose measurement configuration is changed, the terminal clears or releases a measurement result when a subsequent LTM handover is performed.

It should be understood that step 2 to step 4 in Embodiment 5 may be separately used, or may be separately used in combination with other foregoing embodiments. This is not limited.

1: After receiving the RRC reconfiguration message, the terminal sends an RRC reconfiguration complete message to the source cell.

2: The terminal sends an L1 measurement report based on the L1 measurement configuration to report an L1 measurement result. The L1 measurement configuration may be included in the RRC reconfiguration message in step 4.

3: A source DU determines, based on the L1 measurement report sent by the terminal, to trigger an LTM handover.

The source DU sends an L1/L2 handover command to the terminal. The handover command indicates a target cell to which the terminal is to be handed over, or indicates configuration information of a target cell to which the terminal is to be handed over. The target cell is included in the candidate cell.

4: The terminal receives the handover command, and performs a handover to the target cell.

4.1. The terminal generates a complete configuration of a candidate cell or the target cell (the target cell may be one of candidate cells). Specifically:
- If the reference configuration is empty, or the candidate cell configuration or the target cell configuration is a complete configuration, the candidate cell configuration or the target cell configuration is already a complete configuration; and/or
- if the reference configuration is non-empty, the candidate cell configuration or the target cell configuration is a delta configuration based on the reference configuration, or the candidate cell configuration or the target cell configuration is not a complete configuration. The terminal generates a complete configuration of the candidate cell or the target cell based on the delta configuration of the candidate cell or the target cell and the reference configuration of the delta configuration of the candidate cell or the target cell. In an implementation, that the terminal generates the configuration of the target cell, where the configuration of the target cell is the complete configuration of the target cell, may be: The terminal stores a sixth variable including the first reference configuration, and reconfigures the sixth variable based on the delta configuration of the target cell, where a reconfigured sixth variable is the generated configuration of the target cell.

It should be understood that an execution sequence of step 8.1 and step 8 is not limited. For example, step 8.1 may be performed before step 8.

4.2. The terminal applies the complete configuration of the target cell.
- If the target cell configuration includes a fullconfig indication, a full configuration process is performed. For details, refer to 3GPP TS 38.331.
- Otherwise, if the target cell configuration does not include the fullconfig indication, a new LTM process is performed. The new LTM process includes but is not limited to the following:
   **▪** If each RLC bearer included in the current terminal configuration is also included in the configuration of the target cell, the RLC configuration in the current terminal configuration is replaced with the RLC configuration of the target cell; or if the RLC bearer included in the configuration of the target cell is not included in the current terminal configuration, the RLC entity is released. The current terminal configuration is a terminal configuration or a source configuration of the terminal when the terminal receives the handover command. The configuration of the target cell may be a complete configuration of the target cell. It should be understood that, that if each RLC bearer included in the current terminal configuration is also included in the configuration of the target cell, the RLC configuration in the current terminal configuration is replaced with the RLC configuration of the target cell means that for an identifier of an RLC bearer of the target cell, if the identifier of the RLC bearer is also included in the current terminal configuration, the current RLC configuration of the terminal associated with the same RLC bearer identifier is replaced with an RLC configuration that is of the target cell and that is associated with the identifier.
   **▪** Optionally, if each radio bearer RB included in the current terminal configuration is also included in the configuration of the target cell, the RB configuration in the current terminal configuration is replaced with the RB configuration of the target cell; or if the RB included in the target cell configuration is not included in the current terminal configuration, the RB is released. Optionally, each RB configuration includes a PDCP configuration associated with the RB configuration. The configuration of the target cell may be a complete configuration of the target cell. It should be understood that, that if each RB included in the current terminal configuration is also included in the configuration of the target cell, the RB configuration in the current terminal configuration is replaced with the RB configuration of the target cell means that for an RB identifier of the target cell, if the RB identifier is also included in the current terminal configuration, an RB configuration associated with the same RB identifier in the current terminal configuration is replaced with an RB configuration that is of the target cell and that is associated with the RB identifier.
   **▪** Optionally, if each SCell included in the current terminal configuration is also included in the configuration of the target cell, the SCell configuration in the current terminal configuration is replaced with the SCell configuration of the target cell; or if the SCell included in the target cell configuration is not included in the current terminal configuration, the SCell is released. The configuration of the target cell may be a complete configuration of the target cell. It should be understood that, that if each SCell included in the current terminal configuration is also included in the configuration of the target cell, the SCell configuration in the current terminal configuration is replaced with the SCell configuration of the target cell means that for SCell configurations that have a same SCell identifier in the target cell configuration and the current terminal configuration, the SCell configuration in the current terminal configuration with the same SCell identifier is replaced with the SCell configuration in the target cell configuration.
   **▪** Optionally, if the measurement configuration of the target cell does not change, the terminal retains a current measurement result. In this way, the following beneficial effect can be achieved: In a case in which the measurement configuration remains unchanged when the LTM is performed, release or clearing of a measurement result when the terminal applies the configuration of the target cell is avoided. This reduces power consumption of the terminal. After the terminal is handed over to the target cell, the terminal performs measurement based on the measurement configuration of the target cell.
   **▪** Optionally, for the third radio resource configuration:
      ◆ If the reference configuration includes the third radio resource configuration, the complete configuration includes the third radio resource configuration, and the terminal applies the third radio resource configuration in the complete configuration or the reference configuration.
      **◆** If the reference configuration does not include the third radio resource configuration, the terminal keeps an information element in the third radio resource configuration in the current configuration unchanged. The third radio resource configuration is, for example, master key update (for example, masterKeyUpdate), sk-Counter, otherconfig, and/or needForGapsConfigNR-r16. For specific descriptions of masterKeyUpdate, sk-Counter, otherconfig, and needForGapsConfigNR-r16, refer to a standard protocol.

It should be understood that each step in Embodiment 5 may be performed as an optional step. That is, the terminal may perform some steps in this embodiment. The reference configuration in step 4 to step 8 in Embodiment 5 is a reference configuration of a candidate cell configured by the network (for example, a CU) for the terminal, that is, the reference configuration of the air interface. Optionally, the reference configuration in step 3 to step 8 in Embodiment 5 may be the first reference configuration in another embodiment, and the another embodiment may be any one of Embodiment 1 to Embodiment 4 and Embodiment 6.

In Embodiment 5, how to configure an information element that may be included in the configuration of the candidate cell is specified, how to use the information element included in the configuration of the candidate cell is specified, and a configuration use rule of the terminal is specified, to ensure that the terminal can use a correct configuration during the LTM handover, thereby ensuring a successful handover and ensuring normal data receiving and sending. Further, when the LTM handover is performed, whether the measurement configuration is changed is indicated. If the measurement configuration remains unchanged, the terminal retains the measurement result, thereby reducing power consumption of the terminal. For each candidate cell, whether a configuration is a delta configuration, a complete configuration, or a full configuration including a fullconfig indication is indicated. The terminal can accurately determine a configuration of each candidate cell, so that a complete candidate cell configuration can be accurately determined or generated for each candidate cell, and the candidate cell configuration can be correctly applied, thereby ensuring a successful handover.

### [Embodiment 6]

Embodiment 6 provides an LTM handover method, including:
The access network device sends an LTM candidate cell configuration to the terminal. The LTM candidate cell configuration includes configuration information of one or more LTM candidate cells. Optionally, configuration information of each LTM candidate cell may include measurement configuration information of the LTM candidate cell.

The terminal receives the LTM candidate cell configuration from the access network device. Optionally, the terminal releases or retains, based on the measurement configuration information included in the configuration information of each LTM candidate cell, a measurement result of the terminal when performing the LTM. If the measurement configuration of the candidate cell is the same as the measurement configuration of the source cell, the terminal retains the measurement result of the terminal when performing the LTM; or if the measurement configuration of the candidate cell is different from the measurement configuration of the source cell, the terminal releases the measurement result of the terminal when performing the LTM.

In an optional implementation, the LTM candidate cell configuration includes a measurement configuration resource pool, the measurement configuration resource pool includes one or more measurement configurations, and each measurement configuration in the measurement configuration resource pool is associated with a measurement configuration identifier ID. For each LTM candidate cell configuration, the configuration of the candidate cell includes a measurement configuration identifier ID. The terminal determines the measurement configuration of the candidate cell based on the measurement configuration identifier ID in the candidate cell configuration. If a measurement configuration ID of the candidate cell is the same as a current measurement configuration ID of the terminal, the terminal reserves or does not release a current measurement result of the terminal when the terminal performs LTM handover to the candidate cell. In another understanding, if measurement configuration IDs of two candidate cells are the same, the terminal retains a measurement result when performing an LTM handover between the two candidate cells. If the measurement configuration ID of the candidate cell is different from the current measurement configuration ID of the terminal, the terminal releases the current measurement result of the terminal when performing an LTM handover to the candidate cell. In another understanding, if measurement configuration IDs of two candidate cells are the different, the terminal releases a measurement result when performing an LTM handover between the two candidate cells.

In another optional implementation, the terminal receives the LTM candidate cell configuration from the access network device. Optionally, the terminal performs measurement configuration information based on the measurement configuration information included in the configuration information of each LTM candidate cell. The measurement configuration information included in the configuration information of each LTM candidate cell includes first indication information, and the first indication information indicates whether a measurement configuration is changed. Optionally, the first indication information indicates whether the candidate cell changes a measurement configuration of the source cell when the terminal receives the LTM pre-configuration. If the first indication information indicates that the measurement configuration does not change, the terminal retains the measurement result of the terminal when the LTM is performed; or if the first indication information indicates that the measurement configuration does not change, the terminal releases the measurement result of the terminal when the LTM is performed. Optionally, if the terminal is handed over to a cell whose measurement configuration is changed, the terminal clears or releases a measurement result when a subsequent LTM handover is performed. Optionally, the first indication information may be a preset bit.

In Embodiment 6, a measurement configuration method and/or a method for indicating whether a measurement configuration is changed when LTM is performed are/is provided. The terminal may accurately determine, based on the measurement configuration method and/or the first indication information, the measurement configuration of the candidate cell and/or whether the measurement configuration is changed. In addition, the measurement configuration of the terminal may remain unchanged before and after the LTM handover. According to the method in Embodiment 6, unnecessary release or clearing of a measurement result when the terminal applies the configuration of the target cell during LTM can be avoided, thereby reducing measurement power consumption of the terminal and improving handover performance.

It may be understood that Embodiment 6 and any one of Embodiment 1 to Embodiment 5 may be used in combination. For example, Embodiment 6 may be added to a previous embodiment, or Embodiment 6 may be combined with some steps in the foregoing embodiment to form a new embodiment.

### [Embodiment 7]

Embodiment 7 provides an LTM handover method, including:
The access network device sends an LTM candidate cell configuration to the terminal. The LTM candidate cell configuration includes configuration information of one or more LTM candidate cells. Optionally, configuration information of each LTM candidate cell may include second indication information, and the second indication information indicates whether the configuration of the LTM candidate cell is a delta configuration, a complete configuration, or a full configuration including a fullconfig indication. It should be understood that the delta configuration is a delta configuration based on the reference configuration. For details, refer to the descriptions in the foregoing embodiments. For understanding of the complete configuration, refer to the descriptions of the complete configuration of the candidate cell in Embodiment 5.

The terminal receives the LTM candidate cell configuration from the access network device. Optionally, when handing over to each LTM candidate cell based on the second indication information included in the configuration information of the LTM candidate cell, the terminal performs an LTM related operation. The LTM related operation may include at least one of the following: If the target cell configuration includes the fullconfig indication, a full configuration process is performed. For details, refer to 3GPP TS 38.331; or if the target cell configuration does not include the fullconfig indication, the target cell configuration is a complete configuration, or the target cell configuration is a delta configuration, a new LTM process is performed. For the descriptions of the new LTM process, refer to the descriptions in step 8.2 in Embodiment 6.

Optionally, if the reference configuration is non-empty, the candidate cell configuration or the target cell configuration is a delta configuration based on the reference configuration, or the candidate cell configuration or the target cell configuration is not a complete configuration, the terminal generates the complete configuration of the candidate cell or the target cell based on the delta configuration of the candidate cell or the target cell and the reference configuration of the candidate cell or the target cell. The complete configuration of the target cell is the configuration of the target cell. In an implementation, that the terminal generates the configuration of the target cell may be: The terminal stores a sixth variable including the first reference configuration, and reconfigures the sixth variable based on the delta configuration of the target cell, where a reconfigured sixth variable is the generated configuration of the target cell; or if the sixth variable is empty, reconfigures the sixth variable based on the first reference configuration to obtain a seventh variable; and reconfigures the seventh variable based on the delta configuration of the target cell, where a reconfigured seventh variable is a generated configuration of the target cell. In an implementation, an implementation in which the terminal generates the complete configuration of the candidate cell is the same as an implementation in which the terminal generates the configuration of the target cell.

In an optional implementation, the second indication information is a preset bit, and the preset bit indicates whether the candidate cell is a delta configuration or a complete configuration. For example, the preset bit is 1-bit indication information. When a value of the 1-bit indication information is 1, it indicates that the LTM candidate cell configuration is a delta configuration based on the reference configuration; and when the value of the 1-bit indication information is 0, it may indicate that the LTM candidate cell configuration is a complete configuration. Alternatively, when a value of the 1-bit indication information is 0, it indicates that the LTM candidate cell configuration is a delta configuration based on the reference configuration; and when the value of the 1-bit indication information is 1, it may indicate that the LTM candidate cell configuration is a complete configuration. Alternatively, when a value of the 1-bit indication information is true, it indicates that the LTM candidate cell configuration is a delta configuration based on the reference configuration; or when a value of the 1-bit indication information is true, it indicates that the LTM candidate cell configuration is a complete configuration. For another example, the preset bit is 2-bit indication information, where a first bit indicates that the candidate cell is a delta configuration, and a second preset bit indicates that the candidate cell is a complete configuration.

In another optional implementation, the second indication information is new indication information indicating whether the candidate cell configuration is a complete configuration or not a complete configuration. For example, the new indication information is 1-bit preset bit information. When a value of the 1 bit is 1, it indicates that the LTM candidate cell configuration is a complete configuration; and when the value of the 1 bit is 0, it indicates that the LTM candidate cell configuration is not a complete configuration. Alternatively, when a value of the 1 bit is 1, it indicates that the LTM candidate cell configuration is not a complete configuration; and when the value of the 1 bit is 0, it indicates that the LTM candidate cell configuration is a complete configuration. Alternatively, when a value of the 1-bit indication information is true, it indicates that the LTM candidate cell configuration is a complete configuration; and when the 1 bit is not included or the value of the 1-bit indication information is false, it indicates that the LTM candidate cell configuration is not a complete configuration; or when a value of the 1-bit indication information is true, it indicates that the LTM candidate cell configuration is not a complete configuration. In this way, for each LTM candidate cell, the terminal determines, based on the second indication information in the LTM candidate cell, that the LTM candidate cell is a complete configuration; or the terminal determines, based on a fullconfig indication, that the LTM candidate cell is a full configuration including the fullconfig indication. Alternatively, if the candidate cell configuration does not include a fullconfig indication or a complete configuration indication, the terminal considers that the candidate cell configuration is a delta configuration based on the reference configuration. Alternatively, if the candidate cell configuration indicates neither a full configuration nor a complete configuration, the terminal considers that the candidate cell configuration is a delta configuration based on the reference configuration. It should be understood that, for the fullconfig indication, refer to an existing 3GPP protocol.

In another optional implementation, the reference configuration of the candidate cell is mandatory. If all candidate cell configurations are complete configurations, the network configures that reference configuration is empty. If the LTM candidate cell configuration is a hybrid configuration (the hybrid configuration may be understood as a hybrid configuration of two or three of the candidate cell being a delta configuration, the candidate cell configuration being a complete configuration, and the candidate cell configuration being a full configuration including a fullconfig indication), the network may configure a plurality of reference configurations. Alternatively, the network may configure different reference configurations for different candidate cells, or the network may configure a plurality of reference configurations. In a case of a plurality of reference configurations, when configuring an LTM candidate cell for the terminal, the network indicates an identifier of a reference configuration of the candidate cell for each LTM candidate cell. Optionally, the identifier of the reference configuration indicates, to the terminal, whether the configuration is based on the delta configuration or the complete configuration (if the reference configuration is empty, and if a delta configuration of any candidate cell is based on the delta configuration of the empty reference configuration, it may be understood as that the candidate cell is a complete configuration), and/or a delta configuration that is of a specific reference configuration in the plurality of reference configurations and on which the candidate cell is based. It should be understood that, in this implementation, the second indication information may be an identifier of the reference configuration.

In Embodiment 7, to enable the terminal to know whether each candidate cell is a delta configuration, a complete configuration, or a full configuration including a fullconfig indication, when configuring an LTM candidate cell for the terminal, the network may include the second indication information to indicate which one of the three configurations is a configuration of each LTM candidate cell. In this way, the terminal can accurately determine a configuration (a delta configuration, a complete configuration, or a full configuration) of each candidate cell, so that a complete candidate cell configuration can be accurately determined or generated for each candidate cell, and the candidate cell configuration can be correctly applied, thereby ensuring a successful handover.

It may be understood that Embodiment 7 and any one of Embodiment 1 to Embodiment 6 may be used in combination. For example, Embodiment 7 may be added to a previous embodiment, or Embodiment 7 may be combined with some steps in the foregoing embodiment to form a new embodiment.

It should be understood that, in embodiments of this application:
1. In addition to emphasized differences between different embodiments, repeated content of different embodiments may be described mutually.
2. In embodiments of this application, an example in which the radio configuration is the RLC bearer configuration is used for description. If the radio configuration is a DRB, descriptions related to the RLC bearer in embodiments are replaced with descriptions related to the DRB. Principles, mechanisms, and methods are the same. Similarly, the RLC bearer in embodiments of this application may also be replaced with an SRB, an SCell, or the like.
3. In embodiments of this application, the LTM candidate cell configuration may also be referred to as an LTM candidate target cell configuration, a candidate cell configuration or LTM candidate cell configuration information, and meanings thereof may be the same. The LTM candidate cell has a same meaning as the candidate cell. The configuration information of the LTM candidate cell and the LTM pre-configured information may have a same meaning. The name herein is merely an example, and does not constitute a limitation.
4. In embodiments of this application, descriptions of "corresponding to" may also be descriptions of "associated".
5. In embodiments of this application, "in a process in which the terminal performs..." may also be understood as "the terminal is applying..." or "the terminal applies a process of...". In embodiments of this application, the configuration of the source cell may also be understood as the current terminal configuration or a terminal configuration when the handover command is received.
6. In embodiments of this application, the target cell configuration and the configuration of the target cell have a same meaning. The target cell configuration or the configuration of the target cell may be the complete configuration of the target cell. Meanings of the two descriptions may be the same.
7. In embodiments of this application, examples are merely examples, and content of the present invention is not limited.

It may be understood that, to implement functions in the foregoing embodiments, the access network device and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 5 and FIG. 6 are diagrams of structures of possible communication apparatuses according to embodiments of this application. These communication apparatuses may be configured to implement functions of the terminal device or the access network device in the foregoing method embodiments. Therefore, beneficial effects of the foregoing method embodiments can also be achieved. In embodiments of this application, the communication apparatus may be one of the terminals 120a to 120j shown in FIG. 1, may be the access network device 110a or 110b shown in FIG. 1, or may be a module (for example, a chip) used in the terminal or the access network device.

As shown in FIG. 5, a communication apparatus 500 includes a processing unit 510 and a transceiver unit 520. The communication apparatus 500 is configured to implement a function of the terminal or the access network device in the foregoing method embodiments.

When the communication apparatus 500 is configured to implement a function of the terminal in the foregoing method embodiments, the transceiver unit 520 is configured to receive a first configuration from an access network device, where the first configuration includes a first reference configuration and a delta configuration of a target cell, and the first reference configuration is related to the delta configuration of the target cell; and the processing unit 510 is configured to determine a radio configuration of the terminal based on the first reference configuration and the delta configuration of the target cell.

In an implementation, the processing unit 510 is further configured to release current configuration information of the terminal except at least one of a master cell group MCG cell radio network temporary identifier C-RNTI, an access stratum security configuration, a radio bearer RB configuration, a radio link control RLC bearer configuration, a secondary cell SCell configuration, or a logged measurement configuration.

In an implementation, when determining the radio configuration of the terminal based on the first reference configuration and the delta configuration of the target cell, the processing unit 510 is configured to: if a first variable includes a radio configuration of the first reference configuration, update the first variable based on the delta configuration of the target cell, where an updated first variable includes the radio configuration of the target cell; and determine the radio configuration of the terminal based on radio configuration in the updated first variable.

In an implementation, when updating the first variable based on the delta configuration of the target cell, the processing unit 510 is configured to perform at least one of the following: if the first variable includes a first radio configuration, a first list includes a second radio configuration, the first list is a list in the delta configuration of the target cell, and an identifier of the first radio configuration is the same as an identifier of the second radio configuration, updating the first radio configuration in the first variable to the second radio configuration; if the first list includes a third radio configuration, and the first variable includes a radio configuration other than the third radio configuration, add the third radio configuration to the first variable; or if the first variable includes a fourth radio configuration, a second list includes a fifth radio configuration, the second list is a list in the delta configuration of the target cell, and an identifier of the fourth radio configuration is the same as an identifier of the fifth radio configuration, release the fourth radio configuration in the first variable.

In an implementation, when determining the radio configuration of the terminal based on the updated radio configuration in the first variable, the processing unit 510 is configured to perform at least one of the following: if the updated first variable includes a sixth radio configuration, a radio configuration of a source cell includes a seventh radio configuration, and an identifier of the sixth radio configuration is the same as an identifier of the seventh radio configuration, reconfiguring the seventh radio configuration based on the sixth radio configuration; if the updated first variable includes an eighth radio configuration, and the radio configuration of the source cell includes a configuration other than the eighth radio configuration, create the eighth radio configuration in the radio configuration of the terminal; or if the radio configuration of the source cell includes a ninth radio configuration, and the updated first variable includes a configuration other than the ninth radio configuration, release the ninth radio configuration in the radio configuration of the terminal.

In an implementation, the processing unit 510 is further configured to release current cell group configuration information of the terminal in a cell group configuration except at least one of an MCG C-RNTI or an RLC bearer configuration.

In an implementation, when determining the radio configuration of the terminal based on the first reference configuration and the delta configuration of the target cell, the processing unit 510 is specifically configured to: determine a second reference configuration based on a radio configuration in the first reference configuration; and determine the radio configuration of the terminal based on the second reference configuration and the delta configuration of the target cell. The second reference configuration includes at least the tenth radio configuration and the twelfth radio configuration. Optionally, the second reference configuration further includes another radio configuration other than the eleventh radio configuration in a current radio configuration of the terminal.

In an implementation, when determining the second reference configuration based on the radio configuration in the first reference configuration, the processing unit 510 is configured to perform at least one of the following: if the first reference configuration includes a tenth radio configuration, a radio configuration of a source cell includes an eleventh radio configuration, and an identifier of the tenth radio configuration is the same as an identifier of the eleventh radio configuration, updating the eleventh radio configuration of the terminal to the tenth radio configuration; or if the first reference configuration includes a twelfth radio configuration, and the radio configuration of the source cell includes a radio configuration other than the twelfth radio configuration, creating the twelfth radio configuration.

In an implementation, when the first reference configuration includes the tenth radio configuration, the radio configuration of the source cell includes the eleventh radio configuration, and the identifier of the tenth radio configuration is the same as the identifier of the eleventh radio configuration, the processing unit 510 is further configured to delete the identifier of the eleventh radio configuration from a radio configuration identifier that is of the source cell and that is included in a second variable.

In an implementation, when determining the radio configuration of the terminal based on the second reference configuration and the delta configuration of the target cell, the processing unit 510 is configured to perform at least one of the following: if the second reference configuration of the terminal includes a thirteenth radio configuration, the first reference configuration includes a fourteenth radio configuration, a third list includes a fifteenth radio configuration, the third list is a list in the delta configuration of the target cell, and the thirteenth radio configuration, the fourteenth radio configuration, and the fifteenth radio configuration have a same identifier, reconfiguring the thirteenth radio configuration of the terminal based on the fifteenth radio configuration; if the third list includes a sixteenth radio configuration, the third list is the list in the delta configuration of the target cell, and the second reference configuration and the first reference configuration include a configuration other than the sixteenth radio configuration, creating the sixteenth radio configuration; if the third list includes a seventeenth radio configuration, the third list is the list in the delta configuration of the target cell, the first reference configuration includes a configuration other than the seventeenth radio configuration, the second reference configuration includes an eighteenth radio configuration, and an identifier of the seventeenth radio configuration is the same as an identifier of the eighteenth radio configuration, updating the eighteenth radio configuration based on the seventeenth radio configuration; or if a fourth list includes a nineteenth radio configuration, the fourth list is a list in the delta configuration of the target cell, the second reference configuration includes a twentieth radio configuration, and an identifier of the nineteenth radio configuration is the same as an identifier of the twentieth radio configuration, releasing the twentieth radio configuration in the radio configuration of the terminal.

In an implementation, when the third list includes the seventeenth radio configuration, the third list is the list in the delta configuration of the target cell, the first reference configuration includes the configuration other than the seventeenth radio configuration, the second reference configuration includes the eighteenth radio configuration, and the identifier of the seventeenth radio configuration is the same as the identifier of the eighteenth radio configuration, the processing unit 510 is further configured to delete the identifier of the seventeenth radio configuration from the radio configuration identifier that is of the source cell and that is included in the second variable.

In an implementation, the processing unit 510 is further configured to release, in the radio configuration of the terminal, a radio configuration corresponding to the radio configuration identifier included in the second variable.

In an implementation, the radio configuration of the terminal includes at least one of the following: a radio bearer RB configuration, a radio link control RLC bearer configuration, or a secondary cell configuration.

In an implementation, before determining the radio configuration of the terminal based on the first reference configuration and the delta configuration of the target cell, the transceiver unit 520 is further configured to: receive a handover command from the access network device; or meeting, by the terminal, a handover condition.

When the communication apparatus 500 is configured to implement a function of the access network device in the foregoing method embodiments, the processing unit 510 is configured to generate a first configuration, where the first configuration includes a reference configuration and a delta configuration of a target cell, the reference configuration is related to the delta configuration of the target cell, and the delta configuration of the target cell and the reference configuration are for determining a radio configuration of a terminal; and the transceiver unit 520 is configured to send the first configuration to the terminal.

In an implementation, the radio configuration of the terminal includes at least one of the following: a radio bearer RB configuration, a radio link control RLC bearer configuration, or a secondary cell configuration.

In an implementation, after sending the first configuration to the terminal, the transceiver unit 520 is further configured to send a handover command to the terminal.

For more detailed descriptions of the processing unit 510 and the transceiver unit 520, directly refer to the related descriptions in the foregoing method embodiments. Details are not described herein again.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to: store instructions executed by the processor 610, store input data needed by the processor 610 to run instructions, or store data generated after the processor 610 runs instructions.

When the communication apparatus 600 is configured to implement the method provided in the foregoing method embodiments, the processor 610 is configured to implement a function of the processing unit 510, and the interface circuit 620 is configured to implement a function of the transceiver unit 520.

When the communication apparatus is a chip used in the terminal, the chip in the terminal implements the functions of the terminal in the foregoing method embodiments. The chip in the terminal receives information from another module (for example, a radio frequency module or an antenna) in the terminal, where the information is sent by the access network device to the terminal. Alternatively, the chip in the terminal sends information to another module (for example, a radio frequency module or an antenna) in the terminal, where the information is sent by the terminal to the access network device.

When the communication apparatus is a module used in the access network device, the module in the access network device implements the functions of the access network device in the foregoing method embodiments. The module in the access network device receives information from another module (for example, a radio frequency module or an antenna) in the access network device, where the information is sent by the terminal to the access network device. Alternatively, the module in the access network device sends information to another module (for example, a radio frequency module or an antenna) in the access network device, where the information is sent by the access network device to the terminal. The module in the access network device herein may be a baseband chip of the access network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In embodiments of this application, unless otherwise specified, for same or similar parts of embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The foregoing descriptions are implementations of this application, but are not intended to limit the protection scope of this application. Steps in each embodiment may be partially performed (for example, the terminal device may not perform the steps performed by the terminal device in the foregoing embodiments). An execution sequence of different steps may be changed. Embodiments described in this specification may be combined with other embodiments, and steps of different embodiments in this specification may also be combined.

"Embodiment" mentioned herein means that specific features, structures, or characteristics described in combination with an embodiment may be included in at least one embodiment of this application. The phrase shown in various locations in the specification may not necessarily refer to a same embodiment, and is not an independent or optional embodiment exclusive from another embodiment.

In descriptions of this application, unless otherwise specified, a character "/" indicates an "or" relationship between associated objects. For example, A/B may indicate A or B. In this application, a term "and/or" describes only an association relationship between the associated objects and indicates that three relationships may exist. For example, A and/or B may indicate three cases: Only A exists, both A and B exist, and only B exists, where A and B may be singular or plural. In addition, in the descriptions of this application, "a plurality of' means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

All aspects, embodiments, or features are presented in this application by describing a system that may include a plurality of devices, assemblies, modules, or the like. It should be appreciated and understood that, each system may include another device, assembly, module, or the like, and/or may not include all devices, assemblies, modules, or the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, terms "of (of)", "corresponding (corresponding, relevant)", and "corresponding (corresponding)" may be interchangeably used sometimes. It should be noted that meanings expressed by the terms are consistent when differences are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving a first configuration from an access network device, wherein the first configuration comprises a first reference configuration and a delta configuration of a target cell, and the first reference configuration is related to the delta configuration of the target cell; and
determining a radio configuration of a terminal apparatus based on the first reference configuration and the delta configuration of the target cell.

2. The method according to claim 1, further comprising:
releasing current configuration information of the terminal apparatus except at least one of a master cell group MCG cell radio network temporary identifier C-RNTI, an access stratum security configuration, a radio bearer RB configuration, a radio link control RLC bearer configuration, a secondary cell SCell configuration, or a logged measurement configuration.

3. The method according to claim 1 or 2, wherein determining the radio configuration of the terminal apparatus based on the first reference configuration and the delta configuration of the target cell comprises:
if a first variable comprises a radio configuration of the first reference configuration,
updating the first variable based on the delta configuration of the target cell, wherein an updated first variable comprises a radio configuration of the target cell; and
determining the radio configuration of the terminal apparatus based on the radio configuration in the updated first variable.

4. The method according to claim 3, wherein updating the first variable based on the delta configuration of the target cell comprises at least one of the following:
if the first variable comprises a first radio configuration, a first list comprises a second radio configuration, the first list is a list in the delta configuration of the target cell, and an identifier of the first radio configuration is the same as an identifier of the second radio configuration, updating the first radio configuration in the first variable to the second radio configuration;
if the first list comprises a third radio configuration, and the first variable comprises a radio configuration other than the third radio configuration, adding the third radio configuration to the first variable; or
if the first variable comprises a fourth radio configuration, a second list comprises a fifth radio configuration, the second list is a list in the delta configuration of the target cell, and an identifier of the fourth radio configuration is the same as an identifier of the fifth radio configuration, releasing the fourth radio configuration in the first variable.

5. The method according to claim 3 or 4, wherein determining the radio configuration of the terminal apparatus based on the radio configuration in the updated first variable comprises at least one of the following:
if the updated first variable comprises a sixth radio configuration, a radio configuration of a source cell comprises a seventh radio configuration, and an identifier of the sixth radio configuration is the same as an identifier of the seventh radio configuration, reconfiguring the seventh radio configuration in the radio configuration of the terminal apparatus based on the sixth radio configuration;
if the updated first variable comprises an eighth radio configuration, and the radio configuration of the source cell comprises a configuration other than the eighth radio configuration, creating the eighth radio configuration in the radio configuration of the terminal apparatus; or
if the radio configuration of the source cell comprises a ninth radio configuration, and the updated first variable comprises a configuration other than the ninth radio configuration, releasing the ninth radio configuration in the radio configuration of the terminal apparatus.

6. The method according to claim 1, further comprising:
releasing current cell group configuration information of the terminal apparatus in a cell group configuration except at least one of an MCG C-RNTI or an RLC bearer configuration.

7. The method according to claim 1 or 6, wherein determining the radio configuration of the terminal apparatus based on the first reference configuration and the delta configuration of the target cell comprises:
determining a second reference configuration based on a radio configuration in the first reference configuration; and
determining the radio configuration of the terminal apparatus based on the second reference configuration and the delta configuration of the target cell.

8. The method according to claim 7, wherein determining the second reference configuration based on the radio configuration in the first reference configuration comprises at least one of the following:
if the first reference configuration comprises a tenth radio configuration, a radio configuration of a source cell comprises an eleventh radio configuration, and an identifier of the tenth radio configuration is the same as an identifier of the eleventh radio configuration, updating the eleventh radio configuration of the terminal apparatus to the tenth radio configuration; or
if the first reference configuration comprises a twelfth radio configuration, and the radio configuration of the source cell comprises a radio configuration other than the twelfth radio configuration, creating the twelfth radio configuration, wherein
the second reference configuration comprises at least the tenth radio configuration and the twelfth radio configuration.

9. The method according to claim 8, wherein if the first reference configuration comprises the tenth radio configuration, the radio configuration of the source cell comprises the eleventh radio configuration, and the identifier of the tenth radio configuration is the same as the identifier of the eleventh radio configuration, the method further comprises:
deleting the identifier of the eleventh radio configuration from a radio configuration identifier that is of the source cell and that is comprised in a second variable.

10. The method according to any one of claims 7 to 9, wherein determining the radio configuration of the terminal apparatus based on the second reference configuration and the delta configuration of the target cell comprises at least one of the following:
if the second reference configuration of the terminal apparatus comprises a thirteenth radio configuration, the first reference configuration comprises a fourteenth radio configuration, a third list comprises a fifteenth radio configuration, the third list is a list in the delta configuration of the target cell, and the thirteenth radio configuration, the fourteenth radio configuration, and the fifteenth radio configuration have a same identifier, reconfiguring the thirteenth radio configuration of the terminal apparatus based on the fifteenth radio configuration;
if the third list comprises a sixteenth radio configuration, the third list is the list in the delta configuration of the target cell, and the second reference configuration and the first reference configuration comprise a configuration other than the sixteenth radio configuration, creating the sixteenth radio configuration;
if the third list comprises a seventeenth radio configuration, the third list is the list in the delta configuration of the target cell, the first reference configuration comprises a configuration other than the seventeenth radio configuration, the second reference configuration comprises an eighteenth radio configuration, and an identifier of the seventeenth radio configuration is the same as an identifier of the eighteenth radio configuration, updating the eighteenth radio configuration based on the seventeenth radio configuration; or
if a fourth list comprises a nineteenth radio configuration, the fourth list is a list in the delta configuration of the target cell, the second reference configuration comprises a twentieth radio configuration, and an identifier of the nineteenth radio configuration is the same as an identifier of the twentieth radio configuration, releasing the twentieth radio configuration in the radio configuration of the terminal apparatus.

11. The method according to claim 10, wherein if the third list comprises the seventeenth radio configuration, the third list is the list in the delta configuration of the target cell, the first reference configuration comprises the configuration other than the seventeenth radio configuration, the second reference configuration comprises the eighteenth radio configuration, and the identifier of the seventeenth radio configuration is the same as the identifier of the eighteenth radio configuration, the method further comprises:
deleting the identifier of the seventeenth radio configuration from the radio configuration identifier that is of the source cell and that is comprised in the second variable.

12. The method according to any one of claims 9 to 11, further comprising:
releasing, in the radio configuration of the terminal apparatus, a radio configuration corresponding to the radio configuration identifier comprised in the second variable.

13. The method according to claim 1, wherein determining the radio configuration of the terminal apparatus based on the first reference configuration and the delta configuration of the target cell comprises:
generating a configuration of the target cell based on the first reference configuration and the delta configuration of the target cell; and
replacing the radio configuration of the terminal apparatus with a radio configuration in the configuration of the target cell.

14. The method according to claim 1 or 13, wherein generating the configuration of the target cell comprises:
if a sixth variable comprises the first reference configuration, reconfiguring the sixth variable based on the delta configuration of the target cell, wherein a reconfigured sixth variable is the generated configuration of the target cell.

15. The method according to claim 1, 13, or 14, further comprising:
if a measurement configuration in the configuration of the target cell is the same as a measurement configuration in a configuration of the terminal apparatus, retaining, by the terminal apparatus, a current measurement result.

16. The method according to any one of claims 1 to 15, before determining the radio configuration of the terminal apparatus based on the first reference configuration and the delta configuration of the target cell, further comprising:
receiving a handover command from the access network device; or meeting, by the terminal apparatus, a handover condition.

17. The method according to any one of claims 1 to 16, wherein the radio configuration of the terminal apparatus comprises at least one of the following: a radio bearer RB configuration, a radio link control RLC bearer configuration, or a secondary cell configuration.

18. A communication method, comprising:
generating a first configuration, wherein the first configuration comprises a first reference configuration and a delta configuration of a target cell, the first reference configuration is related to the delta configuration of the target cell, and the delta configuration of the target cell and the first reference configuration are for determining a radio configuration of a terminal apparatus; and
sending the first configuration to the terminal apparatus.

19. The method according to claim 18, wherein the radio configuration of the terminal apparatus comprises at least one of the following: a radio bearer RB configuration, a radio link control RLC bearer configuration, or a secondary cell configuration.

20. The method according to claim 18 or 19, wherein after sending the first configuration to the terminal apparatus, further comprising: sending a handover command to the terminal apparatus.

21. A communication apparatus, comprising a unit configured to implement the method according to any one of claims 1 to 17.

22. A communication apparatus, comprising a processor and a memory, wherein the processor is coupled to the memory, and the processor is configured to implement the method according to any one of claims 1 to 17.

23. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 17 by using a logic circuit or by executing code instructions.

24. A communication apparatus, comprising a unit configured to implement the method according to any one of claims 18 to 20.

25. A communication apparatus, comprising a processor and a memory, wherein the processor is coupled to the memory, and the processor is configured to implement the method according to any one of claims 18 to 20.

26. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 18 to 20 by using a logic circuit or by executing code instructions.

27. A computer-readable storage medium, wherein the computer-readable storage medium stores instructions; and when the instructions are run on a computer, the computer is enabled to perform the method according to any one of claims 1 to 17 or the method according to any one of claims 18 to 20.

28. A computer program product, comprising a computer program or instructions, wherein when the computer program or the instructions are run by an apparatus, the method according to any one of claims 1 to 17 is performed, or the method according to any one of claims 18 to 20 is performed.

29. A chip, comprising a processor, wherein the processor is coupled to a memory, and the processor is configured to execute a computer program or instructions stored in the memory, to enable the chip to implement the method according to any one of claims 1 to 17 or the method according to any one of claims 18 to 20.

30. A communication system, comprising a first communication apparatus and a second communication apparatus, wherein
the first communication apparatus is configured to implement the method according to any one of claims 1 to 17; and
the second communication apparatus is configured to implement the method according to any one of claims 18 to 20.
